# EUROPEAN PATENT APPLICATION

(11) **EP 4 745 312 A1**
(43) Date of publication of application: **20.05.2026**
(21) Application number: 24872019.5
(22) Date of filing: 19.09.2024
(51) Int. Cl.: E02F 9/26, G05B 23/02

(54) **OPERATION APPARATUS AND OPERATION SYSTEM**

(30) Priority: 27.09.2023 JP 2023166532; 06.09.2024 JP 2024153977
(71) Applicant: KOBELCO CONSTRUCTION MACHINERY CO., LTD., Hiroshima-shi, Hiroshima 731-5161 (JP)
(72) Inventor: MATSUDA, Yuya, Hiroshima-shi, Hiroshima 731-5161 (JP)
(74) Representative: TBK
(86) International application number: PCT/JP2024/033396
(87) International publication number: WO 2025/070227

(57) **Abstract**

An operation apparatus for operating an operation target includes: an operation mechanism that accepts an operation by an operator; and a control device that acquires, in association with each other, an operation history that is a history of operating the operation target through the operation mechanism, and an operator identifier for identifying an operator who operates the operation mechanism.

## Description

### Technical Field

The present invention relates to an operation apparatus and an operation system for operating an operation target.

### Background Art

A remote operation system configured such that a plurality of work machines serving as operation targets can be selectively remotely operated (i.e., a work machine serving as an operation target can be switched from a first work machine to another work machine) is disclosed (see, for example, Patent Literature 1).

### Citation List

### Patent Literature

Patent Literature 1: JP 2010-198158 A

In the operation system as exemplified in Patent Literature 1, there is a case where an operation target (work machine) of the operation apparatus (remote operation apparatus) is switched. Additionally, it is conceivable that the operator who operates the operation target via the operation apparatus may be changed to another operator. However, in the operation system disclosed in Patent Literature 1, no consideration is given to the case where the operator is changed to another operator. Thus, there is a problem that it is difficult to appropriately acquire an operation history of the operator when the operation target is switched or the operator is changed.

### Summary of Invention

An object of the present invention is to provide an operation apparatus and the like capable of appropriately acquiring an operation history of an operator.

The present invention provides an operation apparatus for operating an operation target, the operation apparatus including: an operation mechanism that accepts an operation by an operator; and a control device that acquires, in association with each other, an operation history that is a history of operating the operation target through the operation mechanism, and an operator identifier for identifying an operator who operates the operation mechanism.

The present invention provides an operation system including the operation apparatus described above and the operation target.

### Brief Description of Drawings

FIG. 1 is a configuration diagram of an operation system according to an embodiment of the present invention.
FIG. 2 is a perspective view of a remote operation apparatus according to the embodiment of the present invention.
FIG. 3 is a perspective view of a work machine according to the embodiment of the present invention.
FIG. 4 is a flowchart of the operation system according to the embodiment of the present invention.
FIG. 5 is a flowchart of an authentication processing function of the operation system according to the embodiment of the present invention.
FIG. 6 is a flowchart of an operation processing function of the operation system according to the embodiment of the present invention.
FIG. 7A is a diagram illustrating a first authentication screen for an operator, in the operation system according to the embodiment of the present invention.
FIG. 7B is a diagram illustrating a second authentication screen for the operator, in the operation system according to the embodiment of the present invention.
FIG. 8A is a diagram illustrating a work content designation screen, in the operation system according to the embodiment of the present invention.
FIG. 8B is a diagram illustrating an operation target designation screen, in the operation system according to the embodiment of the present invention.
FIG. 8C is a diagram illustrating a confirmation screen for a work content and an operation target, in the operation system according to the embodiment of the present invention.
FIG. 9A is a diagram illustrating a first lever pattern setting screen, in the operation system according to the embodiment of the present invention.
FIG. 9B is a diagram illustrating a second lever pattern setting screen, in the operation system according to the embodiment of the present invention.
FIG. 10 is a diagram illustrating a lever sensitivity setting screen, in the operation system according to the embodiment of the present invention.
FIG. 11 is a diagram illustrating a seat vibration mode setting screen, in the operation system according to the embodiment of the present invention.
FIG. 12 is a diagram illustrating an operation assistance setting screen, in the operation system according to the embodiment of the present invention.
FIG. 13 is a diagram illustrating a guidance setting screen, in the operation system according to the embodiment of the present invention.
FIG. 14 is a diagram illustrating a depth perception image, in the operation system according to the embodiment of the present invention.
FIG. 15 is a diagram illustrating a topographic image, in the operation system according to the embodiment of the present invention.
FIG. 16A is a diagram illustrating a first button function setting screen, in the operation system according to the embodiment of the present invention.
FIG. 16B is a diagram illustrating a second button function setting screen, in the operation system according to the embodiment of the present invention.
FIG. 17 is a diagram illustrating an operation selection screen, in the operation system according to the embodiment of the present invention.

### Description of Embodiments

### (Configuration of Operation System)

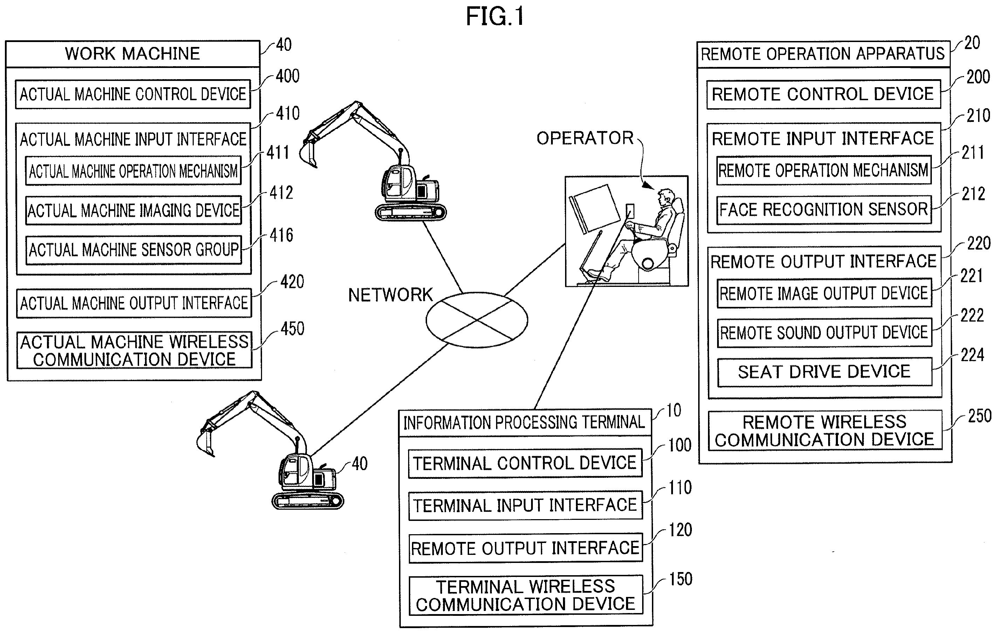

FIG. 1 is a configuration diagram of an operation system according to an embodiment of the present invention. This operation system includes an information processing terminal 10 and a remote operation apparatus 20 (operation apparatus), and is configured to remotely operate a work machine 40 (operation target) using the remote operation apparatus 20. Note that, in another embodiment, the operation system may include the work machine 40. The information processing terminal 10 and the remote operation apparatus 20 are configured to be able to communicate with each other via a first communication network. The remote operation apparatus 20 and the work machine 40 are configured to be able to communicate with each other via a second communication network. The first communication network and the second communication network may have identical or different communication standards and the like. The information processing terminal 10 may be omitted. Additionally, the remote operation apparatus 20 may incorporate the function of the information processing terminal 10. The "operation target" may be any apparatus having a function of performing work and tasks via remote operation, examples of which include, in addition to the work machine 40, a vehicle, a cultivator, or an airplane.

### (Configuration of Information Processing Terminal)

As illustrated in FIG. 1, the information processing terminal 10 includes a terminal control device 100 (control device, control unit), a terminal input interface 110 (input interface, input unit), a terminal output interface 120 (output interface, output unit), and a terminal wireless communication device 150 (communication device) for performing communication via the first communication network. The information processing terminal 10 is, for example, a smartphone, a tablet, or a laptop that is carried by an operator or mounted on the remote operation apparatus 20. The terminal control device 100 includes an arithmetic processing device (a single-core processor or a multi-core processor or a processor core constituting the same), reads necessary data and software from a storage device such as a memory, and executes arithmetic processing on the data in accordance with the software. The terminal input interface 110 and the terminal output interface 120 are each, for example, a touch-panel display.

Furthermore, as described above, the information processing terminal 10 may be a component of the remote operation apparatus 20. In this case, the information processing terminal 10 and the remote operation apparatus 20 may be configured to be capable of wired communication or wireless communication, the terminal input interface 110 may constitute part of a remote input interface 210, and the terminal output interface 120 may constitute part of a remote output interface 220.

### (Configuration of Remote Operation Apparatus)

As illustrated in FIG. 1. the remote operation apparatus 20 includes a remote control device 200 (control device, control unit), the remote input interface 210 (input interface, input unit), the remote output interface 220 (output interface, output unit), and a remote wireless communication device 250 (communication device) capable of communicating with the information processing terminal 10 or the work machine 40 via the first communication network and the second communication network. The remote wireless communication device 250 is assigned, in the second communication network, an operation apparatus identifier (IP address) for identifying the remote wireless communication device 250 and designating it as a transmission destination. The remote control device 200 includes an arithmetic processing device (a single-core processor or a multi-core processor or a processor core constituting the same), reads necessary data and software from a storage device such as a memory, and executes arithmetic processing on the data in accordance with the software. The remote control device 200 communicates with a predetermined work machine 40 selected from among the plurality of work machines 40 via the remote wireless communication device 250, thereby enabling the predetermined work machine 40 to be operated by means of the remote input interface 210.

The remote input interface 210 includes a remote operation mechanism 211 that accepts an operation by an operator and a face authentication sensor 212. The remote output interface 220 includes a remote image output device 221, a remote sound output device 222, and a seat drive device 224.

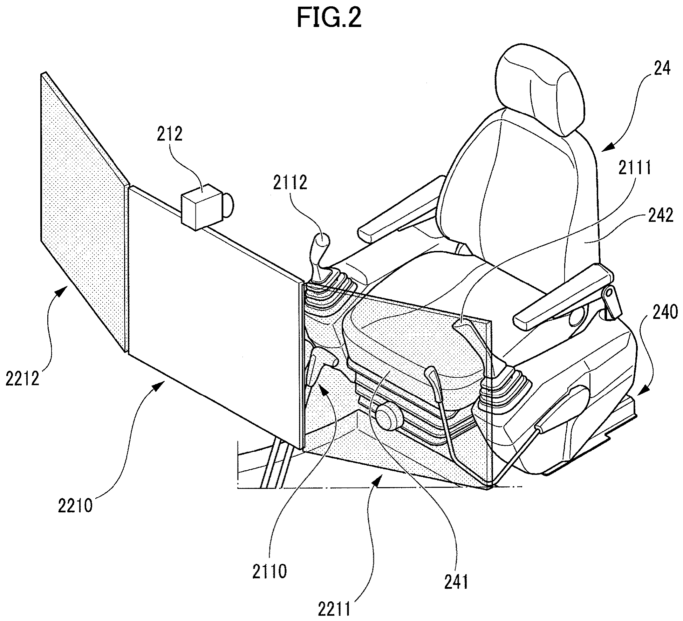

FIG. 2 is a perspective view of the remote operation mechanism 211 according to the present embodiment. The remote operation mechanism 211 includes devices and members illustrated in FIG. 2, including a traveling operation device, a slewing operation device, a boom operation device, an arm operation device, and an end attachment operation device. Each operation device includes an operation lever to be pivotally operated. The operation lever (traveling lever) of the traveling operation device is operated to drive a hydraulic traveling motor (actuator) constituting a traveling drive mechanism in a lower traveling body 41 of the work machine 40. The traveling lever may also serve as a traveling pedal. For example, a traveling pedal fixed to a base part or a lower end of the traveling lever may be provided. The operation lever (slewing lever) of the slewing operation device is operated to actuate a hydraulic slewing motor (actuator) constituting a slewing drive mechanism of the work machine 40. The operation lever (boom lever) of the boom operation device is operated to actuate a boom cylinder 442 of the work machine 40. The operation lever (arm lever) of the arm operation device is operated to actuate an arm cylinder 444 of the work machine 40. The operation lever (end attachment lever) of the end attachment operation device is operated to actuate an end attachment cylinder 446 of the work machine 40. On the side of the traveling pedal, an optional pedal operated to actuate an end attachment or the like of the work machine 40 may be disposed.

The operation levers constituting the remote operation mechanism 211 are disposed around a seat 24 in which the operator sits, for example, as illustrated in FIG. 2. The seat 24 includes a seat portion 241 installed on an upper side of a seat base 240, and a backrest portion 242, and is in the form of a high-back chair with armrests. Note that the seat 24 may be a seating portion in any form that allows the operator to sit, such as a form of a low-back chair without a headrest or a form of a chair without the backrest portion 242. The information processing terminal 10 may be configured to be mountable on the seat 24 and/or on a lateral side of the seat 24. In this case, it is preferable that a touch screen of the information processing terminal 10 be mounted facing the seat 24 such that the display of the information processing terminal 10 can be easily operated and viewed by an operator sitting in the seat 24. Additionally, a cutoff lever (not illustrated) may be mounted on the seat 24 and/or on the lateral side of the seat 24. The cutoff lever has a function of prohibiting the operation of the work machine (stopping actuator operation) when tilted from an unlock position to a lock position.

Left and right traveling levers 2110 corresponding to left and right crawlers are disposed side by side in front of the seat 24. One operation lever may also serve as a plurality of operation levers. For example, a left operation lever 2111 provided in front of a left frame of the seat 24 illustrated in FIG. 2 may function as the arm lever when operated in a front-rear direction, and may function as the slewing lever when operated in a left-right direction. Similarly, a right operation lever 2112 provided in front of a right frame of the seat St illustrated in FIG. 2 may function as the boom lever when operated in the front-rear direction, and may function as the end attachment lever when operated in the left-right direction. Such a lever pattern may be freely changed in accordance with an operation instruction of an operator.

As illustrated in FIG. 2, the face authentication sensor 212 includes a camera and/or a distance measuring sensor disposed in front of the seat 24. On the basis of a captured image of the face of the operator captured by the camera and/or a three-dimensional shape of the face of the operator obtained by the distance measuring sensor, authentication processing for the operator is executed.

The remote image output device 221 includes a single image output device or a plurality of image output devices. As illustrated in FIG. 2, for example, the remote image output device 221 includes a central remote image output device 2210, a left remote image output device 2211, and a right remote image output device 2212 each having a substantially rectangular screen and respectively disposed in front of the seat 24, at a position diagonally forward to the left of the seat 24, and at a position diagonally forward to the right of the seat 24. The respective screens (image display regions) of the central remote image output device 2210, the left remote image output device 2211 and the right remote image output device 2212 may have the same shape and size or different shapes and sizes. The remote image output device 221 may include a single image output device that is curved or capable of being curved, or may include two, or four or more, image output devices disposed so as to surround the front of the seat 24.

As illustrated in FIG. 2, the right edge of the left remote image output device 2211 is adjacent to the left edge of the central remote image output device 2210 such that the screen of the central remote image output device 2210 and the screen of the left remote image output device 2211 form a first designated angle (e.g., in the range of 120° to 150°). As illustrated in FIG. 2, the left edge of the right remote image output device 2212 is adjacent to the right edge of the central remote image output device 2210 such that the screen of the central remote image output device 2210 and the screen of the right remote image output device 2212 form a second designated angle (e.g., in the range of 120° to 150°).

The respective screens of the central remote image output device 2210, the left remote image output device 2211. and the right remote image output device 2212 may be parallel to the vertical direction or may be inclined with respect to the vertical direction. At least one image output device among the central remote image output device 2210, the left remote image output device 2211, and the right remote image output device 2212 may include plurally divided image output devices. For example, the central remote image output device 2210 may include image output devices which are adjacent to each other in an up-down direction and have a substantially rectangular screen.

The remote sound output device 222 includes one or a plurality of speakers. For example, the remote sound output device 222 includes respective sound output devices disposed at the rear of the seat 24, the rear part of the left armrest, and the rear part of the right armrest. The respective sound output devices may have the same specification or different specifications. The remote sound output device 222 may be configured to output sounds of the work machine 40 that are collected by a microphone mounted on the work machine 40.

The seat drive device 224 constitutes a "seat device" together with the seat 24. The seat drive device 224 is configured such that the seat 24 is tiltable or swingable relative to the seat base 240 (or integrally with the seat base 240) about a pitch axis and/or a roll axis (about the roll axis as appropriate). The seat drive device 224 may be configured to vibrate the seat 24 relative to the seat base 240 (or integrally with the seat base 240) in a direction along at least one of the pitch axis, the roll axis, and a yaw axis.

### (Configuration of Work Machine)

As illustrated in FIG. 1, the work machine 40 includes an actual machine control device 400, an actual machine input interface 410, an actual machine output interface 420, and an actual machine wireless communication device 450 for performing communication via the second communication network. The actual machine wireless communication device 450 is assigned, in the second communication network, an actual machine identifier (IP address) for identifying the actual machine wireless communication device 450 and designating it as a transmission destination. Each of the components of the actual machine control device 400 includes an arithmetic processing device (a single-core processor or a multi-core processor or a processor core constituting the same), reads necessary data and software from a storage device such as a memory, and executes arithmetic processing on the data in accordance with the software.

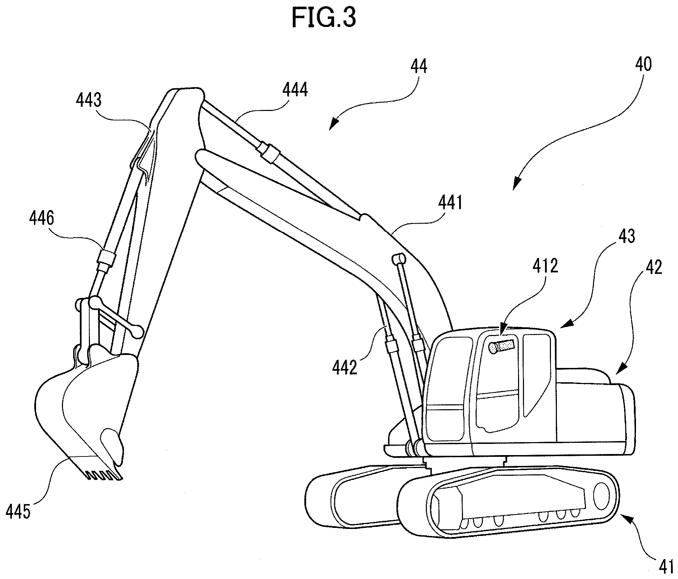

FIG. 3 is a perspective view of the work machine 40 according to the present embodiment. The work machine 40 is, for example, a hydraulic excavator, and as illustrated in FIG. 3, includes the lower traveling body 41 of a crawler type that constitutes a traveling drive mechanism, and an upper slewing body 42 that is mounted on the lower traveling body 41 so as to be capable of slewing via the slewing drive mechanism. A cab 43 (driver's compartment) is provided at a front-left part of the upper slewing body 42. A work mechanism 44 is provided at a front-right part of the upper slewing body 42. The cab 43 may be configured to be driven to be raised and lowered relative to the upper slewing body 42 by a raising and lowering drive mechanism (not illustrated) including a link mechanism and an actuator, and may be configured to have a variable tilt angle relative to the upper slewing body 42 by a tilt drive mechanism (not illustrated) including an actuator.

The actual machine input interface 410 includes an actual machine operation mechanism 411, an actual machine imaging device 412, and an actual machine sensor group 416. The actual machine operation mechanism 411 includes a plurality of operation levers disposed around the seat disposed inside the cab 43 in the same manner as the remote operation mechanism 211. In the cab 43, an actuation mechanism or a robot is provided that receives a signal corresponding to the operation mode of the remote operation lever and operates an actual machine operation lever on the basis of the received signal. The actual machine operation mechanism 411 may be configured by an actuation mechanism that operates control valves constituting a hydraulic circuit mounted on the work machine 40. The actual machine imaging device 412 is installed, for example, inside the cab 43, and captures, through the front window and the left and right side windows, images of the environment in front of the cab 43 including at least a part of the work mechanism 44. Some or all of the front window and the side windows may be omitted. The actual machine imaging device 412 may be mounted outside the cab 43 as long as it captures the images of the environment in front of the cab 43 including at least a part of the work mechanism 44.

The actual machine sensor group 416 includes various sensors configured to output, to the actual machine control device 400, signals corresponding to values of parameters relating to the state of the work machine 40. The state of the work machine 40 includes an actual machine orientation detected by an actual machine orientation sensor, that is, an inclination angle about the pitch axis (pitch angle) and/or an inclination angle about the roll axis (roll angle) with respect to the vertical direction of the upper slewing body 42. The actual machine orientation sensor is, for example, a three-dimensional acceleration sensor. The state of the work machine 40 may include, in addition to whether a prime mover (equipment that generates vibration such as an engine or a hydraulic pump) is operating, a derricking angle of a boom 441 relative to the upper slewing body 42, a pivot angle of an arm 443 relative to the boom 441, a pivot angle of an end attachment 445 (lifting magnet) relative to the arm 443, hydraulic pressure, the remaining fuel level, and the like. The state of the work machine 40 may include the sounds of the work machine 40 that are collected by the microphone mounted on the work machine 40.

As illustrated in FIG. 3, the work mechanism 44 (actuation mechanism) includes the boom 441 having a proximal end attached to the upper slewing body 42 so as to be capable of performing a derricking motion, the arm 443 having a proximal end pivotally connected to a distal end of the boom 441, and the end attachment 445 having a proximal end pivotally connected to a distal end of the arm 443. To the work mechanism 44, the boom cylinder 442, the arm cylinder 444, and the end attachment cylinder 446 as actuators that are hydraulic cylinders capable of extending and retracting are attached.

As the end attachment 445, for example, the following may be adopted in addition to a bucket having a container for accommodating objects such as excavated materials: a lifting magnet; a grapple for gripping objects by opening and closing a plurality of facing gripping claws; a bucket with a hook capable of locking objects on the hook attached to a back surface of the bucket and lifting the object; and a breaker having a chisel that is supported by a breaker body so as to be able to reciprocate and applies an impact on a work object. The chisel of the breaker may be configured to be operable via a switch. Furthermore, at the proximal end of the boom 441 and the proximal end of the arm 443, there may be provided a swing mechanism that swings the distal end left and right relative to the corresponding proximal end, and a slide arm in which a telescopic mechanism slidable relative to the arm 443 is provided so that the arm 443 is extendable and retractable, and the swing mechanism and the slide arm may be configured to be operable by a switch or an optional pedal. On the front side of the lower traveling body 41, there may be provided a dozer having a dozing blade raising and lowering drive mechanism for driving the dozing blade to be raised and lowered by a dozer cylinder, and the dozer may be configured to be operable by a switch or an optional pedal.

The boom cylinder 442 is interposed between the boom 441 and the upper slewing body 42 so as to extend and retract upon supply of the hydraulic oil to pivot the boom 441 in a derricking direction. The arm cylinder 444 is interposed between the arm 443 and the boom 441 so as to extend and retract upon supply of the hydraulic oil to pivot the arm 443 about a horizontal axis relative to the boom 441. The end attachment cylinder 446 is interposed between the end attachment 445 and the arm 443 so as to extend and retract upon supply of the hydraulic oil to pivot the end attachment 445 about a horizontal axis relative to the arm 443.

The actual machine control device 400 includes a switch capable of switching whether power is supplied to the actual machine control device 400. When the switch switches from a state where no power is supplied to the actual machine control device 400 to a state where power is supplied to the actual machine control device 400, the actual machine control device 400 starts operation. When the actual machine control device 400 starts operation, the actual machine wireless communication device 450 is activated by the actual machine control device 400, and the actual machine wireless communication device 450 connects to the first communication network and the second communication network. Additionally, the actual machine control device 400 that has started the operation activates the actual machine imaging device 412 and the actual machine sensor group 416. In the state where no power is supplied to the actual machine control device 400 by the switch, the actual machine control device 400 stops the operation. As a result, the actual machine wireless communication device 450 is stopped and is in a state of being unable to communicate with the information processing terminal 10 or the work machine 40 via the first communication network and the second communication network. Furthermore, when the actual machine control device 400 stops the operation, operations of the actual machine imaging device 412 and the actual machine sensor group 416 stop.

### (Functions)

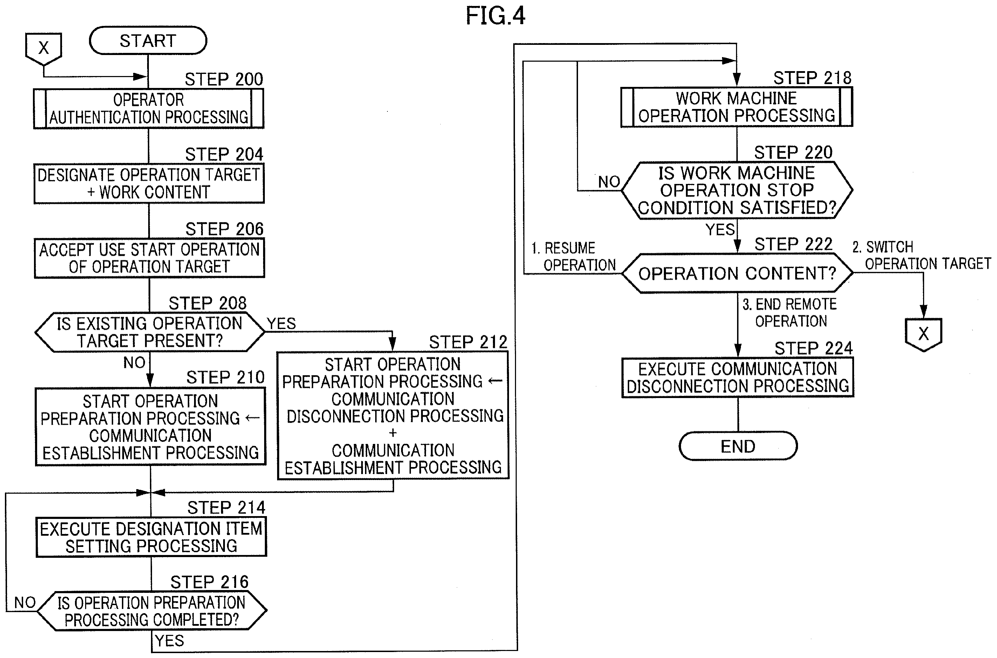

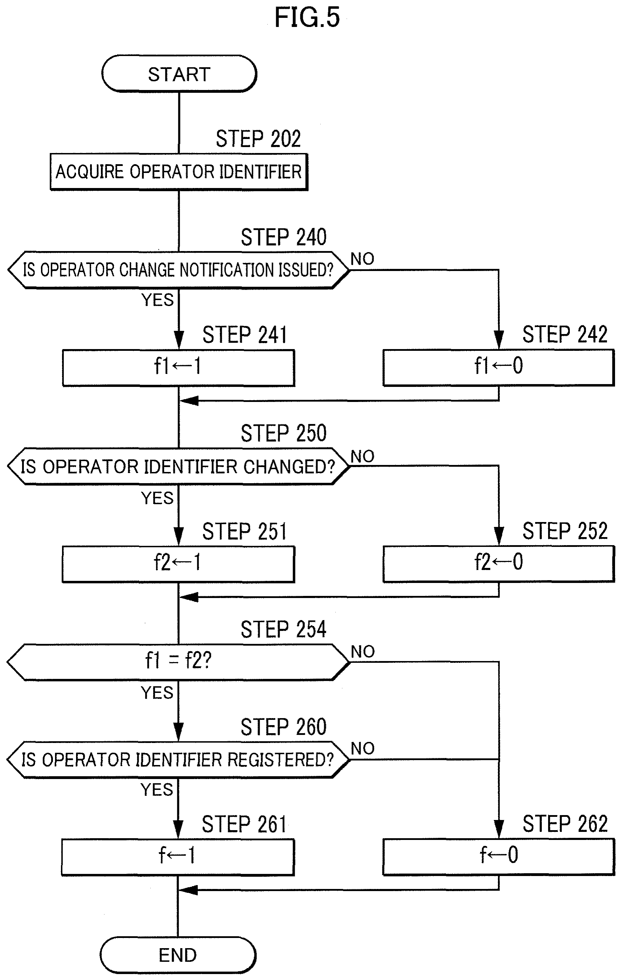

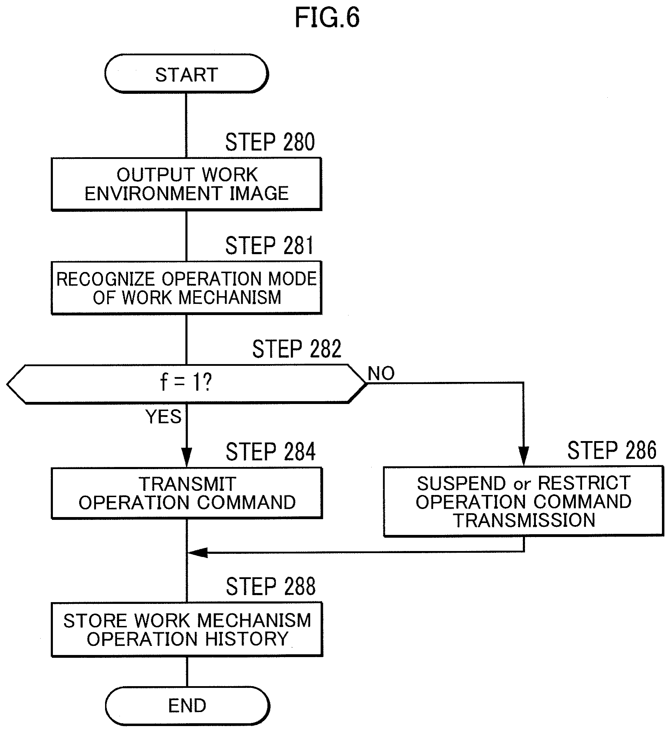

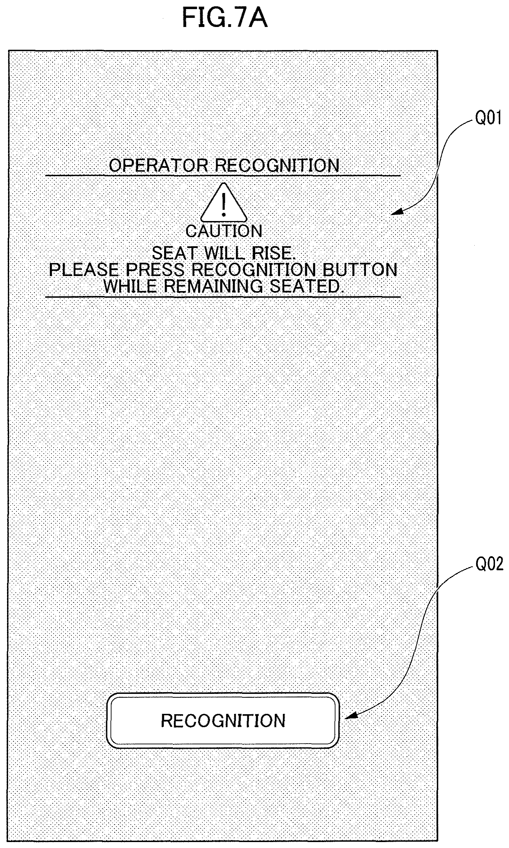

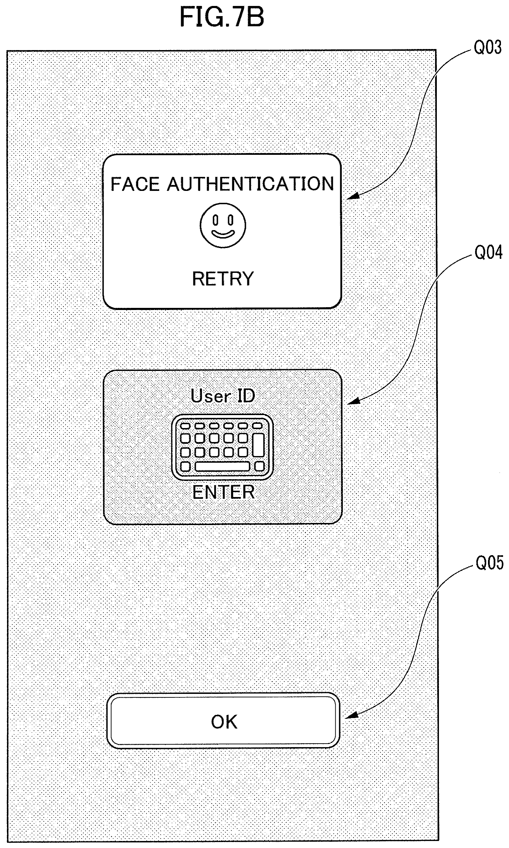

FIG. 4 is a flowchart of the operation system according to the embodiment of the present invention. FIG. 5 is a flowchart of an authentication processing function of the operation system according to the present embodiment. FIG. 6 is a flowchart of an operation processing function of the operation system according to the present embodiment. FIG. 7A is a diagram illustrating a first authentication screen for an operator, in the operation system according to the present embodiment. FIG. 7B is a diagram illustrating a second authentication screen for the operator, in the operation system according to the present embodiment. The functions of the remote operation apparatus 20 and the remote operation system having the above configurations will be described with reference to FIG. 4 to FIG. 7B.

When processing of the operation system is started, the remote control device 200 (authentication unit) first executes authentication processing (FIG. 4/STEP 200). Specifically, as illustrated in FIG. 7A, a message Q01 prompting the operator to sit in the seat 24 and an authentication button Q02 are output to the remote output interface 220 (remote image output device 221) (the remote output interface 220 outputs/displays (the same applies hereinafter)). The various buttons output to the remote output interface 220 (remote image output device 221) constitute a touch-panel-type input interface.

When the authentication button Q02 is, for example, tapped, as illustrated in FIG. 7B, a face authentication button Q03 and an identifier authentication button Q04 are output to the remote output interface 220. When the face authentication button Q03 is tapped, face authentication of the operator is executed by using, for example, a camera and/or a distance measuring sensor mounted on the remote operation apparatus 20 and/or the information processing terminal (and further, by querying a database). When the identifier authentication button Q04 is tapped, authentication of the operator is executed by using the operator identifier (or the operator identifier (user ID) and a passcode) entered through the remote input interface 210 (remote image output device 221). When the authentication has succeeded, an OK button Q05 is output to the remote output interface 220 (remote image output device 221) together with information indicating that the authentication has succeeded. When the authentication has failed, information indicating that the authentication has failed is output to the remote output interface 220 (remote image output device 221). When the authentication has failed, the face authentication button Q03 and the identifier authentication button Q04 may be output again on the remote output interface 220 (remote image output device 221).

Details of the authentication processing executed by the remote control device 200 will be described with reference to the flowchart of FIG. 5. The authentication processing may be executed as background processing either continuously or periodically. Specifically, first, the operator identifier (including captured image data and/or distance measurement data for face authentication) is acquired (FIG. 5/STEP 202). When the operator identifier by face authentication has not been acquired for a certain period of time, an operation history indicating that the operator is away from the seat (i.e., a state where the operator is not sitting in the seat 24) is acquired together with the last acquired operator identifier.

A determination is made as to whether an operator change notification has been accepted through the remote input interface 210 (or a change notification input interface (touch button) constituting the remote input interface 210) (FIG. 5/STEP 240). When a result of the determination is affirmative (FIG. 5/YES in STEP 240), a first flag f1, which indicates whether a change notification has been issued, is set to "1" (FIG. 5/STEP 241). On the other hand, when the result of the determination is negative (FIG. 5/NO in STEP 240), the first flag f1 is set to "0" (FIG. 5/STEP 242).

Subsequently, a determination is made as to whether the operator identifier has changed (whether the operator identifiers acquired at the most recent plurality of timings differ from earlier operator identifiers) (FIG. 5/STEP 250). When a result of the determination is affirmative (FIG. 5/YES in STEP 250), a second flag f2, which indicates whether the operator identifier has changed, is set to "1" (FIG. 5/STEP 251). For example, when the operator leaves the seat 24 once and another operator subsequently sits in the seat 24, the result of the determination is affirmative because a newly acquired operator identifier differs from the last acquired operator identifier. On the other hand, when the result of the determination is negative (FIG. 5/NO in STEP 250), the second flag f2 is set to "0" (FIG. 5/STEP 252).

Furthermore, a determination is made as to whether the first flag f1 and the second flag f2 are equal (FIG. 5/STEP 254). When a result of the determination is negative (FIG. 5/NO in STEP 254), that is, when an operator change notification has been issued but the operator identifier has not changed, or when an operator change notification has not been issued but the operator identifier has changed, an authentication flag f indicating whether authentication has succeeded is set to "0" (FIG. 5/STEP 262).

On the other hand, when the result of the determination is affirmative (FIG. 5/YES in STEP 254), that is, when an operator change notification has been issued and the operator identifier has changed, or when an operator change notification has not been issued and the operator identifier has not changed, a determination is made as to whether authentication has succeeded (FIG. 5/STEP 260). Specifically, a determination is made as to whether authentication has succeeded on the basis of whether the latest operator identifier is registered in a storage device constituting the remote control device 200 and/or in an external database. When a result of the determination is affirmative (FIG. 5/STEP 260 ·· YES), the authentication flag f is set to "1" (FIG. 5/STEP 261). On the other hand, when the result of the determination is negative (FIG. 5/NO in STEP 260), the authentication flag f is set to "0" (FIG. 5/STEP 262). When the authentication flag f is set, a series of authentication processing ends.

The processing for determining whether an operator change notification has been issued and the processing relating to the first flag f1 accompanying this processing (see FIG. 5/STEP 240, STEP 241, and STEP 242), and the processing for determining whether the operator identifier has changed and the processing relating to the second flag f2 accompanying this processing (see FIG. 5/STEP 250. STEP 251, and STEP 252) may be executed in reverse order or in parallel. The processing for determining whether an operator change notification has been accepted through the remote input interface 210 and the processing relating to the first flag f1 accompanying this processing may be omitted (see FIG. 5/STEP 240, STEP 241, STEP 242, and STEP 254). The processing for determining whether the operator identifier has changed and the processing relating to the second flag f2 accompanying this processing may be omitted (see FIG. 5/STEP 250, STEP 251, and STEP 252). The processing for comparing the first flag f1 and the second flag f2 may be omitted (see FIG. 5/STEP 254).

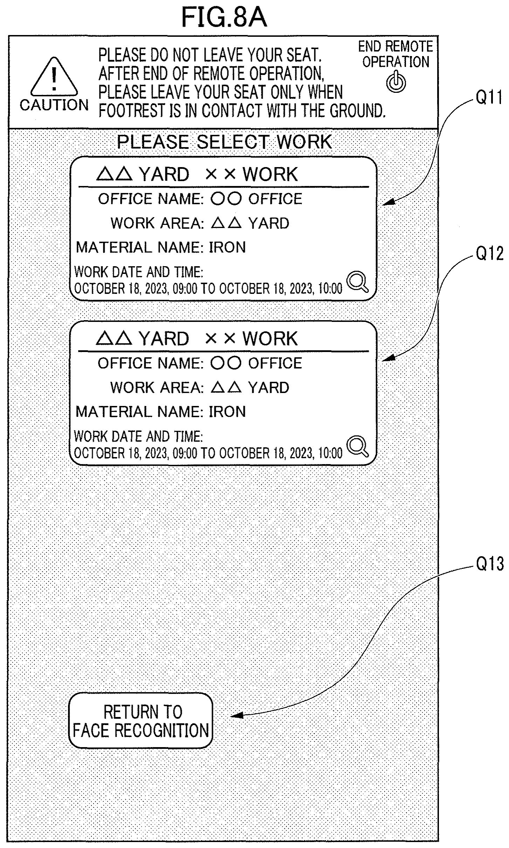

FIG. 8A is a diagram illustrating a work content designation screen, in the operation system according to the present embodiment. When the OK button Q05 is tapped after the operator is authenticated through the authentication processing in STEP 200 of FIG. 4, the operation target and the work content (scheduled work content) are designated or selected (FIG. 4/STEP 204). That is, each input interface accepts a designation command for designating an operation target. More specifically, when the OK button Q05 is tapped, as illustrated in FIG. 8A, work content selection windows Q11 and Q12 and a back button Q13 are output to the remote output interface 220 (remote image output device 221). Each of the plurality of (e.g., two) work content selection windows Q11 and Q12 displays, for example, a work name, a work-related office name, a work site, characteristics (e.g., materials) of a work object, and a work period. When the back button Q13 is, for example, tapped, the screen illustrated in FIG. 7A or FIG. 7B is output to the remote output interface 220 (remote image output device 221).

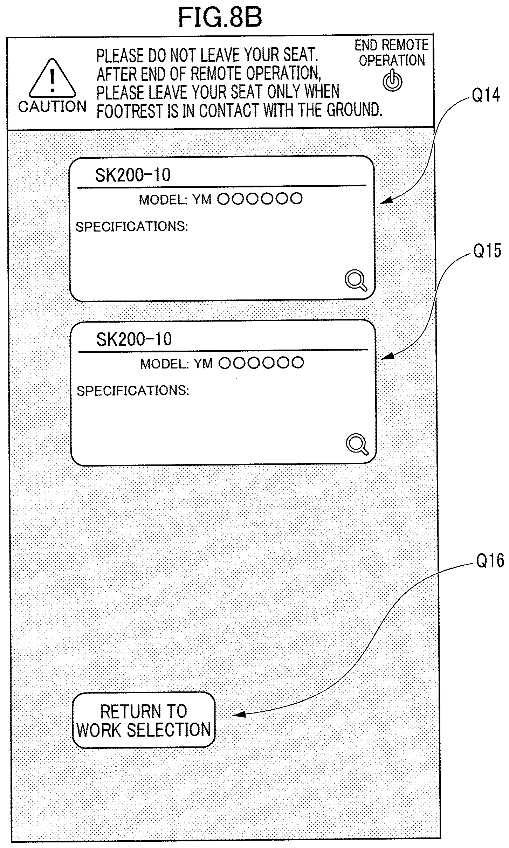

FIG. 8B is a diagram illustrating an operation target designation screen, in the operation system according to the present embodiment. When one of the above work content selection windows Q11 and Q12 is, for example, tapped, as illustrated in FIG. 8B, operation target candidate selection windows Q14 and Q15 and a back button Q16 are output to the remote output interface 220 (remote image output device 221). Each of the plurality of (e.g., two) operation target candidate selection windows Q14 and Q15 displays, for example, a model number, a model name, specification information, and the like of the work machine 40 that is an operation target candidate. The model number, the model name, the specification information, and the like of the operation target candidate are registered in the storage device constituting the remote control device 200 and/or in an external database, in association with the actual machine identifier for identifying the work machine 40 (operation target). Note that, among the work machines 40 that are operation targets, only operation target candidates that have been switched by the above switch to a state where power is supplied to the actual machine control device 400 are selectable; operation target candidates that have not been switched to the above state where power is supplied are displayed in a grayed-out manner, and the windows Q14 and Q15 are output to the remote output interface 220 (remote image output device 221) in a manner not to accept selection even when, for example, tapped. When the back button Q16 is, for example, tapped, the screen illustrated in FIG. 8A is output to the remote output interface 220 (remote image output device 221).

On the basis of the identity of the operator authenticated by the execution of the authentication processing (see FIG. 4/STEP 200), a plurality of operation target candidates may be retrieved from the storage device constituting the remote control device 200 and/or from an external database, and a plurality of operation target candidate selection windows indicating respective model numbers, and the like, of the plurality of operation target candidates may be output to the remote output interface 220 (remote image output device 221). In other words, the remote control device 200 causes the remote output interface 220 (remote image output device 221) to output at least one operation target candidate, on the basis of the identity of the operator authenticated (by the authentication unit). Consequently, from among the operation target candidates output to the remote output interface 220 on the basis of the identity of the operator, the operator can designate, in accordance with the intention of the operator, a new operation target through the remote input interface 210. Note that the storage device and/or an external database has, in advance, registered operation target candidates to be used by each operator, on the basis of the identity of the operator identified by the operator identifier. Furthermore, the remote input interface 210 is capable of accepting the designation command of a new operation target selected from the at least one operation target candidate output to the remote output interface 220 (remote image output device 221).

On the basis of the type of the work content (scheduled work content) selected from the plurality of work content selection windows, a plurality of operation target candidates (which may be at least one operation target candidate) may be retrieved from the storage device constituting the remote control device 200 and/or from an external database, and a plurality of operation target candidate selection windows indicating respective model numbers, and the like, of the plurality of operation target candidates may be output to the remote output interface 220 (remote image output device 221). Consequently, from among the operation target candidates output to the remote output interface 220 (remote image output device 221) on the basis of the type of the scheduled work content, the operator can designate, in accordance with the intention of the operator, a new operation target through the remote input interface 210. Note that the storage device and/or an external database has, in advance, registered the scheduled work content for each operator and the operation target candidates to be used in performing the scheduled work content, on the basis of the identity of the operator identified by the operator identifier.

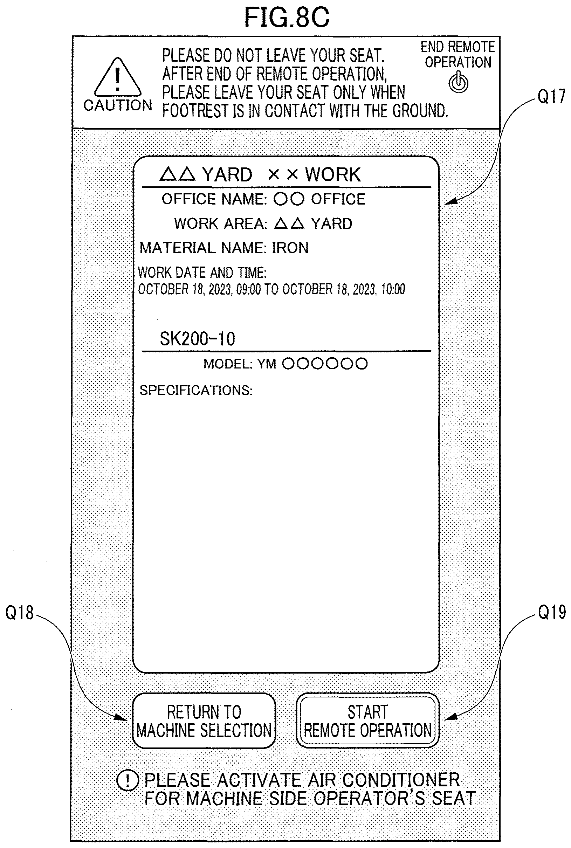

FIG. 8C is a diagram illustrating a confirmation screen for a work content and an operation target, in the operation system according to the present embodiment. When one of the operation target selection windows Q14 and Q15 is, for example, tapped, as illustrated in FIG. 8C, a selection result confirmation window Q17, a back button Q18, and an operation start button Q19 are output to the remote output interface 220 (remote image output device 221). The selection result confirmation window Q17 displays, for example, information about the selected work content and the work machine 40 that is the operation target. When the back button Q18 is, for example, tapped, the screen illustrated in FIG. 8B is output to the remote output interface 220 (remote image output device 221).

Next, a use start operation of the operation target is accepted (FIG. 4/STEP 206). Specifically, the operation start button Q19 illustrated in FIG. 8C is, for example, tapped.

In response to this, a determination is made as to whether an existing operation target for the remote control device 200 is present or absent (FIG. 4/STEP 208). Specifically, a determination is made as to whether the work machine 40 that is the operation target in a communication-established state with the remote operation apparatus 20 is present or absent. The value of the flag is changed when communication with the operation target is established and/or when such established communication with the operation target is released, and the value of the flag may be used for the determination.

When a determination is made that an existing operation target is absent (FIG. 4/NO in STEP 208), the remote control device 200 starts execution of communication establishment processing as "operation preparation processing" (FIG. 4/STEP 210). In this processing, the remote control device 200 first acquires, from among the actual machine identifiers associated with respective ones of the plurality of operation target candidates registered in the storage device and/or in an external database, the actual machine identifier corresponding to the work machine 40 selected as the operation target by the designation command.

Next, the remote control device 200 transmits, to a transmission destination identified and indicated by the actual machine identifier corresponding to the actual machine wireless communication device 450 of the work machine 40 selected as the operation target, a communication establishment request signal for requesting establishment of communication with the work machine 40 that is the operation target. The communication establishment request signal includes the operation apparatus identifier corresponding to the remote wireless communication device 250 of the remote operation apparatus 20.

When the actual machine control device 400 mounted on the work machine 40 that is the operation target receives the communication establishment request signal through the actual machine wireless communication device 450, the actual machine control device 400 transmits, to the remote wireless communication device 250 of the remote operation apparatus 20 that is the transmission destination identified and indicated by the operation apparatus identifier included in the communication establishment request signal, an approval signal indicating approval of the request for communication establishment.

When the remote control device 200 receives the approval signal through the remote wireless communication device 250, the remote control device 200 transmits, to the transmission destination identified and indicated by the actual machine identifier, an activation signal for activating the actual machine imaging device 412 and the actual machine sensor group 416 mounted on the work machine 40, and waits until the remote control device 200 receives, through the remote wireless communication device 250, captured images acquired by the actual machine imaging device 412 and the signal corresponding to the actual machine operating status relating to the state of the work machine 40 acquired by the actual machine sensor group 416.

When the actual machine control device 400 receives the activation signal through the actual machine wireless communication device 450, the actual machine control device 400 activates the actual machine imaging device 412 and the actual machine sensor group 416, starts transmitting, to the transmission destination identified and indicated by the operation apparatus identifier, the captured images acquired by the actual machine imaging device 412 and the signal corresponding to the actual machine operating status relating to the state of the work machine 40 acquired by the actual machine sensor group 416, and starts receiving, through the actual machine wireless communication device 450, the signal corresponding to the operation mode of the remote operation lever for performing control to operate the actuation mechanism. Note that the signal corresponding to the actual machine operating status includes information related to the actual machine identifier corresponding to the actual machine wireless communication device 450.

The remote control device 200 outputs, to the remote output interface 220, the captured images and the actual machine operating status received through the remote wireless communication device 250. For example, the remote control device 200 outputs the received captured images to the remote image output device 221, outputs the sounds of the work machine 40 included in the received actual machine operating status to the remote sound output device 222, and controls the operation of the seat drive device 224 in accordance with the tilt angle included in the received actual machine operating status.

As described above, the actual machine control device 400 executes, as the operation preparation processing, processing of establishing the communication with the operation target through the communication device. As a result of executing such communication establishment processing, communication for remotely operating the work machine 40 (operation target) by the remote operation apparatus 20 is established between the remote wireless communication device 250 of the work machine 40 selected as the operation target and the remote wireless communication device 250.

Note that, when communication establishment processing is scheduled to be executed between the work machine 40 that is the operation target and the remote operation apparatus 20, the remote control device 200 may transmit a communication establishment request signal before the time at which the communication establishment processing is executed. In this case, the communication establishment request signal includes the operation apparatus identifier corresponding to the remote wireless communication device 250 of the remote operation apparatus 20, and information regarding the time at which the communication establishment processing is to be established. The actual machine control device 400 mounted on the work machine 40 that is the operation target stores, in the storage device mounted on the work machine 40, the operation apparatus identifier included in the communication establishment request signal received through the remote wireless communication device 250; when it is time to establish the communication establishment processing, the actual machine control device 400 reads out the operation apparatus identifier from the storage device and transmits, to the remote wireless communication device 250 of the remote operation apparatus 20 that is the transmission destination identified and indicated by the read operation apparatus identifier, the approval signal indicating approval of the request for communication establishment.

Furthermore, the operation apparatus identifier and the actual machine identifier may be assigned identifiers other than an IP address, as long as they can identify the remote wireless communication device 250 and the actual machine wireless communication device 450 in the second communication network. For example, as in a service set identifier (SSID), a wireless LAN access point or the like may be assigned to the remote wireless communication device 250 and the actual machine wireless communication device 450. In order that the operation apparatus identifier and the actual machine identifier can identify the remote wireless communication device 250 and the actual machine wireless communication device 450 in the second communication network, the operation apparatus identifier and the actual machine identifier may be configured to, for example, correspond to a plurality of letters, numerals, and/or symbols representing serial numbers of components, such as an engine and/or a battery, mounted on the work machine 40 together with the actual machine wireless communication device 450. For communication, on the basis of the operation apparatus identifier and the actual machine identifier, an authenticator is generated in accordance with a designation scheme. Depending on differences in the data or letters, numerals, and symbols constituting the operation apparatus identifier and the actual machine identifier, the authenticator may be generated in accordance with different designation schemes. Then, the remote control device 200 uses the generated authenticator to establish wireless communication for the remote wireless communication device 250 and the actual machine wireless communication device 450 identified by a communication identifier.

On the other hand, when a determination is made that an existing operation target for the remote control device 200 is present (FIG. 4/YES in STEP 208), the remote control device 200 starts, as the "operation preparation processing", execution of communication disconnection processing in addition to the communication establishment processing (FIG. 4/STEP 212).

In the communication establishment processing in the operation preparation processing, the remote control device 200 first acquires, from among the actual machine identifiers associated with respective ones of the plurality of operation target candidates registered in the storage device and/or in an external database, the actual machine identifier corresponding to the work machine 40 (another operation target) selected as the operation target by the designation command.

Next, the remote control device 200 transmits, to the transmission destination identified and indicated by the actual machine identifier corresponding to the actual machine wireless communication device 450 of the work machine 40 selected as the operation target, a communication establishment request signal for requesting establishment of communication with the work machine 40 that is the operation target.

When the actual machine control device 400 mounted on the work machine 40 that is the operation target receives the communication establishment request signal through the actual machine wireless communication device 450, the actual machine control device 400 transmits, to the remote wireless communication device 250 of the remote operation apparatus 20 that is the transmission destination identified and indicated by the operation apparatus identifier included in the communication establishment request signal, an approval signal indicating approval of the request for communication establishment.

When the remote control device 200 receives the approval signal through the remote wireless communication device 250, the remote control device 200 transmits, to the transmission destination identified and indicated by the actual machine identifier, an activation signal for activating the actual machine imaging device 412 and the actual machine sensor group 416 mounted on the work machine 40, and waits until the remote control device 200 receives, through the remote wireless communication device 250, captured images acquired by the actual machine imaging device 412 and the signal corresponding to the actual machine operating status relating to the state of the work machine 40 acquired by the actual machine sensor group 416.

When the actual machine control device 400 receives the activation signal through the actual machine wireless communication device 450, the actual machine control device 400 activates the actual machine imaging device 412 and the actual machine sensor group 416, starts transmitting, to the transmission destination identified and indicated by the operation apparatus identifier, the captured images acquired by the actual machine imaging device 412 and the signal corresponding to the actual machine operating status relating to the state of the work machine 40 acquired by the actual machine sensor group 416, and starts receiving, through the actual machine wireless communication device 450, the signal corresponding to the operation mode of the remote operation lever for performing control to operate the actuation mechanism. Note that the signal corresponding to the actual machine operating status includes information related to the actual machine identifier corresponding to the actual machine wireless communication device 450.

The remote control device 200 outputs, to the remote output interface 220, the captured images and the actual machine operating status received through the remote wireless communication device 250.

As described above, as the communication establishment processing in the operation preparation processing, the remote control device 200 executes the processing of establishing the communication with the operation target through the communication device.

In the communication disconnection processing in the operation preparation processing, the remote control device 200 first stops outputting, to the remote output interface 220, the captured images and the actual machine operating status of the work machine 40 (one work machine), which is the existing operation target, received through the remote wireless communication device 250, and further stops transmitting, to the work machine 40 (one work machine), the signal corresponding to the operation mode of the remote operation lever for the work machine 40 (one work machine).

Next, the remote control device 200 transmits, to the transmission destination identified and indicated by the actual machine identifier corresponding to the actual machine wireless communication device 450 of the work machine 40 that is the existing operation target, a communication disconnection request signal for requesting disconnection of communication establishment.

When the actual machine control device 400 mounted on the work machine 40 that is the existing operation target receives the communication disconnection request signal through the actual machine wireless communication device 450, the actual machine control device 400 executes processing of turning off the power of the actual machine imaging device 412 and the actual machine sensor group 416 that have been activated. Then, the actual machine control device 400 executes processing of cutting off the supply of the power to the actual machine control device 400.

As described above, the actual machine control device 400 executes, as the operation preparation processing, the communication disconnection processing of releasing the communication-established state between the remote operation apparatus 20 and the work machine 40 that is in the communication-established state with the remote operation apparatus 20. Note that, in this communication disconnection processing, the energized state of the actual machine control device 400 mounted on the work machine 40 may be maintained (the processing of cutting off the supply of the power to the actual machine control device 400 is not executed). As a result, a state may be maintained where the actual machine control device 400 can receive, through the actual machine wireless communication device 450, the signal corresponding to the operation mode of the remote operation lever for performing control to operate the actuation mechanism; and when the actual machine control device 400 activates again the actual machine imaging device 412 and the actual machine sensor group 416, the actual machine control device 400 can transmit the captured images acquired by the actual machine imaging device 412 and the signal, corresponding to the actual machine operating status concerning the state of the work machine 40, acquired by the actual machine sensor group 416, to the remote operation apparatus 20 through the actual machine wireless communication device 450.

The communication establishment processing and the communication disconnection processing may be executed in parallel or concurrently. When the communication establishment processing and the communication disconnection processing are executed in parallel or concurrently, the remote control device 200, while executing the processing of acquiring the actual machine identifier corresponding to the work machine 40 (another operation target), simultaneously starts processing of stopping outputting, to the remote output interface 220, the captured images and the actual machine operating status of the work machine 40 (one work machine), and of stopping transmitting, to the work machine 40 (one work machine), the signal corresponding to the operation mode of the remote operation lever to the work machine 40 (one work machine). Then, the remote control device 200 advances the communication establishment processing and the communication disconnection processing in parallel or concurrently.

Here, either the execution of the processing of turning off the power of the actual machine imaging device 412 and the actual machine sensor group 416 of the work machine 40 (one work machine) that is the existing operation target, or the execution of the processing of activating the actual machine imaging device 412 and the actual machine sensor group 416 of the work machine 40 (another operation target) may be executed first. That is, the remote control device 200 may temporarily be in a state of receiving captured images and the actual machine operating statuses from both the work machine 40 (one work machine) that is the existing operation target, and the work machine 40 (another operation target). In this case, the remote control device 200 reads the actual machine identifiers of transmission sources assigned to the signals representing the received captured images and actual machine operating statuses, thereby selecting the captured images and the actual machine operating statuses of the work machine 40 (another operation target) and outputting them to the remote output interface 220. Additionally, the start times of the communication establishment processing and the communication disconnection processing may be identical or different. The end times of the communication establishment processing and the communication disconnection processing may be identical or different. The communication establishment processing and the communication disconnection processing may be executed in series (sequentially).

After the start of execution of the operation preparation processing, designation item setting processing is executed for setting of content of a designation item for assisting the operation of the work machine 40, which is the operation target, by the remote operation apparatus 20 (FIG. 4/STEP 214). When the determination has been made that the existing operation target is absent (FIG. 4/NO in STEP 208), the designation item setting processing is executed in parallel or concurrently with execution of the communication establishment processing serving as the operation preparation processing (FIG. 4/STEP 210), and for example, is started simultaneously with the start of execution of the communication establishment processing. When the determination has been made that the existing operation target is present (FIG. 4/YES in STEP 208), the designation item setting processing is executed in parallel or concurrently with execution of the communication establishment processing and the communication disconnection processing that serve as the operation preparation processing (FIG. 4/STEP 212), and for example, is started simultaneously with the start of execution of the communication establishment processing and the communication disconnection processing. Subsequently, the remote control device 200 determines whether the operation preparation processing has been completed (FIG. 4/STEP 216). When a determination is made that the operation preparation processing has not been completed (FIG. 4/NO in STEP 216), the designation item setting processing is continuously executed (FIG. 4/STEP 214).

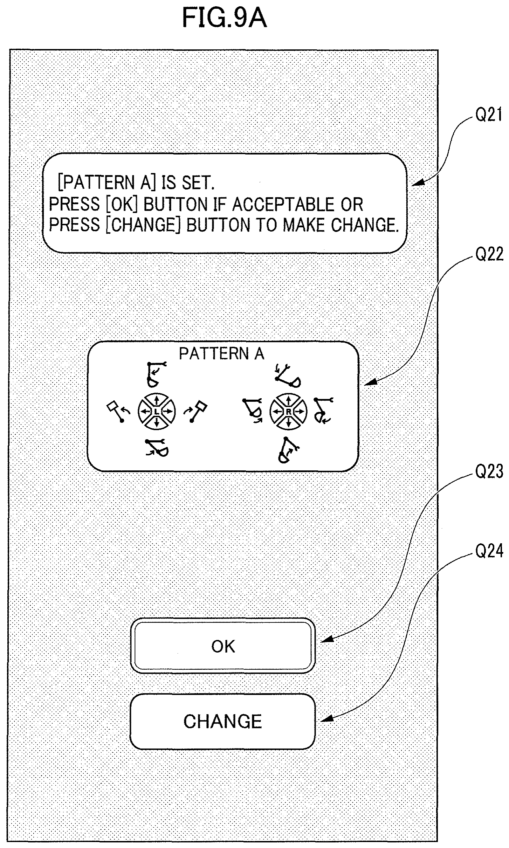

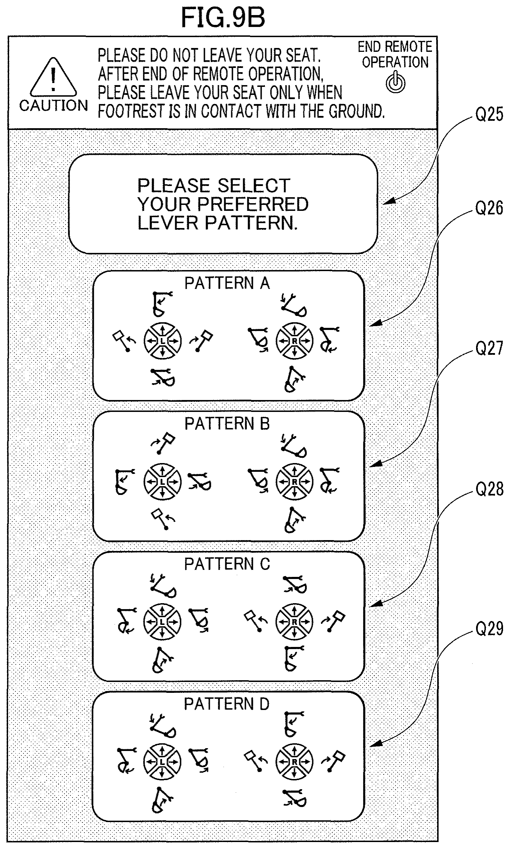

Hereinafter, the designation item setting processing will be described in detail. FIG. 9A is a diagram illustrating a first lever pattern setting screen, in the operation system according to the present embodiment. FIG. 9B is a diagram illustrating a second lever pattern setting screen, in the operation system according to the present embodiment. In the designation item setting processing, first, for example, a menu screen for selecting a plurality of designation items is output to the remote output interface 220 (remote image output device 221). When "lever pattern" is selected as the designation item on the menu screen, the first lever pattern setting screen illustrated in FIG. 9A is output to the remote output interface 220 (remote image output device 221).

As illustrated in FIG. 9A, the first lever pattern setting screen includes a first operation guidance window Q21, a lever pattern window Q22, an OK button Q23, and a change button Q24. The first operation guidance window Q21 displays information for guiding the operation procedures for setting the lever pattern. The lever pattern window Q22 displays a provisionally set lever pattern. When the OK button Q23 is, for example, tapped by the operator, the lever pattern displayed in the lever pattern window Q22 is definitively set. When the change button Q24 is, for example, tapped by the operator, the second lever pattern setting screen illustrated in FIG. 9B is output to the remote output interface 220 (remote image output device 221).

The definitively set lever pattern may be stored and retained in the storage device constituting the remote control device 200 and/or in the database, in association with the operator identifier (including image and distance measurement data for face authentication) and/or the actual machine identifier. Using the operator identifier used in the authentication processing and/or the actual machine identifier used for the operation target designation, the last definitively set lever pattern may be retrieved or read from the storage device and then displayed by default in the lever pattern window Q22 as a provisionally set lever pattern. The definitively set lever pattern may simply be stored and retained in the storage device constituting the remote control device 200 and/or in an external database, read from the storage device or the like, and then displayed by default in the lever pattern window Q22 as a provisionally set lever pattern.

As illustrated in FIG. 9B, the second lever pattern setting screen includes a second operation guidance window Q25 and a plurality of (e.g., four) lever pattern candidate windows Q26, Q27, Q28, and Q29. The second operation guidance window Q21 displays information for guiding the selection of one of the lever pattern candidate windows Q26, Q27, Q28, and Q29 in order to set a lever pattern. The lever pattern windows Q26, Q27, Q28, and Q29 each display a lever pattern candidate different from the provisionally set lever pattern. In response to one of the lever pattern candidate windows Q26, Q27, Q28, and Q29 being selectively, for example, tapped, the first lever pattern setting screen is output to the remote output interface 220 (remote image output device 221) (see FIG. 9A). At this time, the selected lever pattern candidate is displayed in the lever pattern window Q22 as a provisionally set lever pattern.

Note that the first lever pattern setting screen and the second lever pattern setting screen may be output to the remote output interface 220 (remote image output device 221) as a single screen, or as three or more multiple transitioning screens.

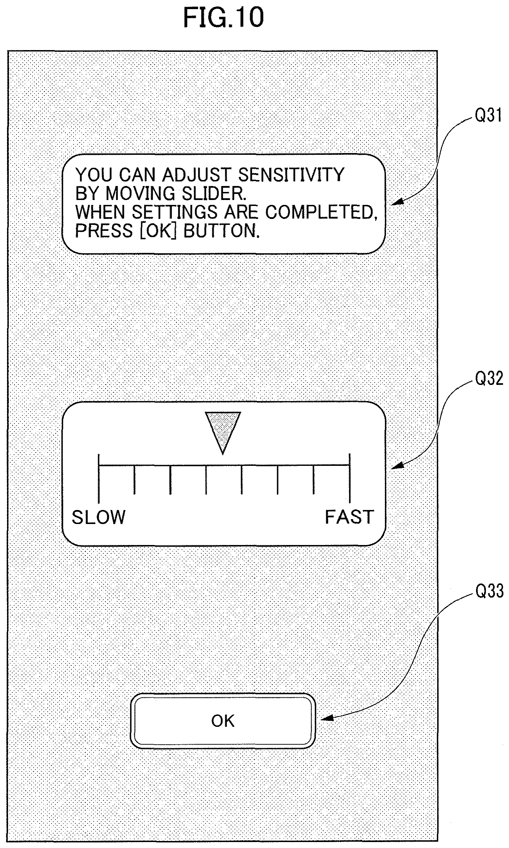

FIG. 10 is a diagram illustrating a lever sensitivity setting screen, in the operation system according to the present embodiment. When "lever sensitivity" is selected as the designation item on the menu screen, the lever sensitivity setting screen illustrated in FIG. 10 is output to the remote output interface 220 (remote image output device 221). As illustrated in FIG. 10, the lever sensitivity setting screen includes an operation guidance window Q31, a lever sensitivity adjustment bar Q32, and an OK button Q33. The operation guidance window Q31 displays information for guiding the operation procedures for setting the lever sensitivity. The lever sensitivity adjustment bar Q32 includes a scale indicating the lever sensitivity (determining the magnitude of the amount of displacement or the level of the speed of displacement of the operation target in accordance with the amount of lever operation) and, for example, a triangular slider, and by adjusting the position of the slider along the scale, the lever sensitivity is provisionally set. When the OK button Q33 is, for example, tapped, the lever sensitivity displayed on the lever sensitivity adjustment bar Q32 is definitively set.

The definitively set lever sensitivity may be stored and retained in the storage device constituting the remote control device 200 and/or in an external database, in association with an operator identifier and/or the actual machine identifier. Using the operator identifier used in the authentication processing and/or the actual machine identifier used for the operation target designation, a default position of the slider on the lever sensitivity adjustment bar Q32 may be adjusted after the last definitively set lever sensitivity is retrieved or read from the storage device as a provisionally set lever sensitivity. The definitively set lever sensitivity may simply be stored and retained in the storage device constituting the remote control device 200 and/or in an external database, and the default position of the slider on the lever sensitivity adjustment bar Q32 may be adjusted after the definitively set lever sensitivity is read from the storage device or the like.

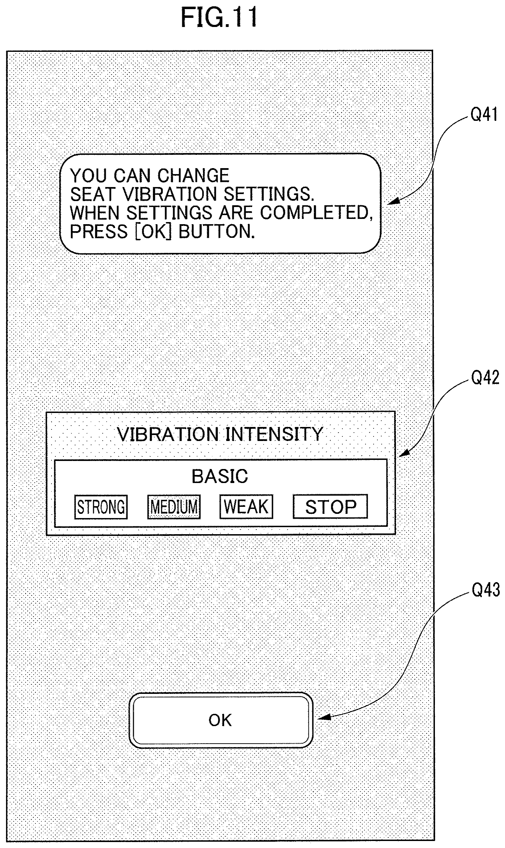

FIG. 11 is a diagram illustrating a seat vibration mode setting screen, in the operation system according to the present embodiment. When "seat vibration" is selected as the designation item on the menu screen, the seat vibration setting screen illustrated in FIG. 11 is output to the remote output interface 220 (remote image output device 221). As illustrated in FIG. 11, the seat vibration setting screen includes an operation guidance window Q41, a seat vibration intensity selection window Q42, and an OK button Q43. The operation guidance window Q41 displays information for guiding the operation procedures for setting the vibration intensity (including whether to generate vibration) of the seat 24 (or the seat device). The seat vibration intensity selection window Q42 includes a plurality of buttons, and by selectively, for example, tapping one button from among the plurality of buttons, the vibration intensity of the seat device is provisionally set. When the OK button Q43 is, for example, tapped, the vibration intensity of the seat device corresponding to that one button is definitively set.

The definitively set vibration intensity may be stored and retained in the storage device constituting the remote control device 200 and/or in an external database, in association with an operator identifier and/or the actual machine identifier. Using the operator identifier used in the authentication processing and/or the actual machine identifier used for the operation target designation, the last definitively set vibration intensity may be retrieved or read from the storage device and then displayed by default in the seat vibration intensity selection window Q42 as a provisionally set vibration intensity. The definitively set vibration intensity may simply be stored and retained in the storage device constituting the remote control device 200 and/or in an external database, read from the storage device or the like, and then displayed by default in the seat vibration intensity selection window Q42 as a provisionally set vibration intensity.

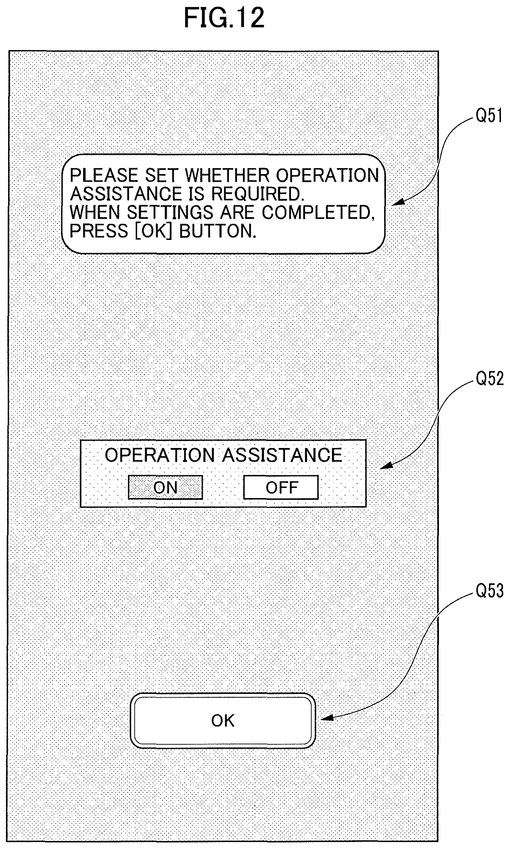

FIG. 12 is a diagram illustrating an operation assistance setting screen, in the operation system according to the present embodiment. When "operation assistance" is selected as the designation item on the menu screen, the operation assistance setting screen illustrated in FIG. 12 is output to the remote output interface 220 (remote image output device 221). As illustrated in FIG. 12, the operation assistance setting screen includes an operation guidance window Q51, an operation assistance window Q52, and an OK enabled/disabled button Q53. The operation guidance window Q51 displays information for guiding the operation procedures for setting whether operation assistance is enabled or disabled. The operation assistance window Q52 includes an ON button and an OFF button for provisionally setting whether the operation assistance is enabled or disabled or set to ON or OFF. When the OK button Q53 is, for example, tapped, the operation assistance is definitively set. When the operation assistance is definitively set to ON, the operation content assisted by the operation assistance may be output to the remote output interface 220 (remote image output device 221). The operation content is, for example, a horizontal pulling operation in which the bucket, which is the end attachment 445, is moved linearly along the ground on which the lower traveling body 41 of the work machine 40 is grounded, and an operation of bringing the bucket closer from a first position located forward away from the upper slewing body 42 to a second position located closer to the upper slewing body 42 than the first position. A plurality of types of operation content assisted by the operation assistance may be provided, and whether the operation assistance is enabled or disabled may be configured to be settable for the plurality of types of operation content.

Furthermore, a simulation image indicating an operating status where the work machine 40 is assisted by the operation assistance may be output to the remote output interface 220 (remote image output device 221). The remote control device 200 executes processing of recognizing an operation mode of the remote input interface 210 (remote operation mechanism 211) by the operator, processing of correcting the recognized operation mode so as to approach a target operation mode, processing of recognizing a behavior of the work machine 40 in the virtual space on the basis of the corrected operation mode, and processing of outputting, as the simulation image, an image that simulatively displays a state reflecting a change in orientation of the work machine 40 in accordance with the recognized behavior, to the remote output interface 220 (remote image output device 221). For example, when the OK button Q53 is, for example, tapped, a simulation image indicating an operating status assisted by operation assistance in the work machine 40, which is the operation target, in the virtual space is output to the remote output interface 220 (remote image output device 221). Then, when the work machine 40 in the virtual space is operated by the operator through the remote input interface 210 (remote operation mechanism 211), on the basis of the operation mode of the remote input interface 210 (remote operation mechanism 211), the simulation image indicates a state where the work machine 40 operates in accordance with such an operation mode and the position and orientation of the end attachment 445 and the like change. Thus, the remote control device 200, the remote input interface 210 (remote operation mechanism 211), and the remote output interface 220 (remote image output device 221) constitute a "simulation device". Here, when the operator performs, through the remote input interface 210 (remote operation mechanism 211), the operation of bringing the bucket closer from the first position located forward away from the upper slewing body 42 of the work machine 40 in the virtual space to the second position located closer to the upper slewing body 42 than the first position, the simulation image indicates a state where the bucket tip linearly moves from the first position to the second position. Specifically, when the operator performs, through the remote input interface 210 (the remote operation mechanism 211), an operation of pivoting the arm 443 downward while pivoting the boom 441 upward and further pivoting the bucket tip such that the bucket tip faces downward, the operation is corrected such that the bucket tip is not separated by a predetermined distance or more from a target trajectory linearly connecting the first position to the second position (a shift amount of the bucket tip with respect to the target trajectory is reduced), and is reflected in the simulation image. The first position, the second position, and the target trajectory may be visualized and indicated in the simulation image, and the first position and the second position may be set to any positions by an operation of the operator (e.g., position setting can be performed by moving the bucket tip to a position desired to be the first position or the second position and pressing a determination button). Furthermore, after communication between the remote operation apparatus 20 and the work machine 40 that is the operation target is established and the work machine 40 is brought into a state capable of being remotely operated by the remote operation apparatus 20, remote operation simulation of the work machine 40 in the virtual space may be permitted in a state where the remote operation of the work machine 40 is stopped or temporarily stopped.

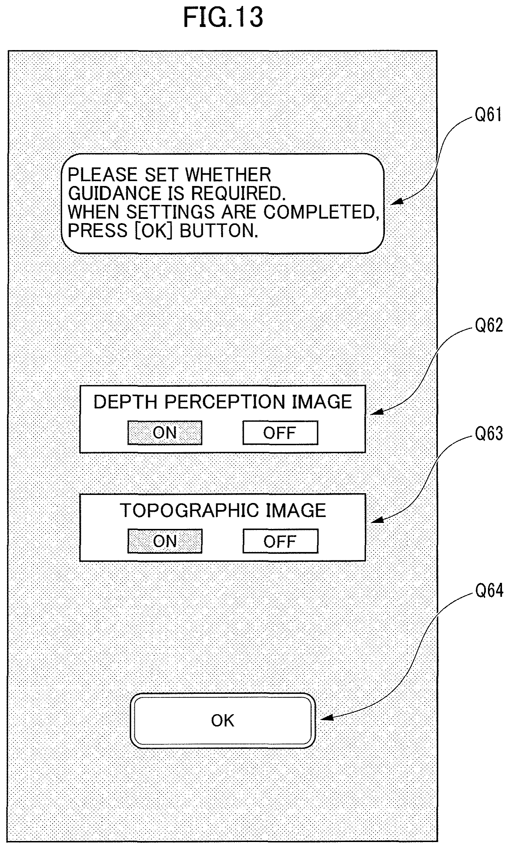

FIG. 13 is a diagram illustrating a guidance setting screen, in the operation system according to the present embodiment. When "guidance (operation assistance image)" is selected as the designation item on the menu screen, the operation assistance image setting screen illustrated in FIG. 13 is output to the remote output interface 220 (remote image output device 221). As illustrated in FIG. 13, the operation assistance image setting screen includes an operation guidance window Q61, a depth perception image window Q62, a topographic image window Q63, and an OK button Q64. The operation guidance window Q61 displays information for guiding the operation procedures for setting a display mode of the operation assistance image on the remote output interface 220 (remote image output device 221). The depth perception image window Q62 includes an ON button and an OFF button for provisionally setting whether the display of the depth perception image is enabled or disabled or set to ON or OFF on the remote output interface 220 (remote image output device 221). The topographic image window Q63 includes an ON button and an OFF button for provisionally setting whether the display of the topographic image is enabled or disabled or set to ON or OFF on the remote output interface 220 (remote image output device 221). When the OK button Q64 is, for example, tapped, whether the display of the depth perception image is enabled or disabled and whether the display of the topographic image is enabled or disabled are definitively set.

The definitively set enabling or disabling of the display of the depth perception image and/or the topographic image may be stored and retained in the storage device constituting the remote control device 200 and/or in an external database, in association with an operator identifier and/or the actual machine identifier. Using the operator identifier used in the authentication processing and/or the actual machine identifier used for the operation target designation, the last definitively set enabling or disabling (ON or OFF) of the display may be retrieved or read from the storage device and then displayed by default in the depth perception image window Q62 and/or the topographic image window Q63. The definitively set enabling or disabling of the display of the depth perception image and/or the topographic image may simply be stored and retained in the storage device constituting the remote control device 200 and/or in an external database, read from the storage device or the like, and then displayed by default in the depth perception image window Q62 and/or the topographic image window Q63.

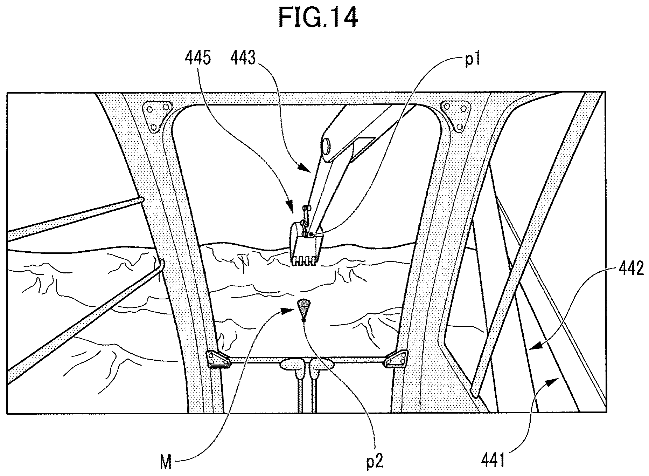

Furthermore, a simulation image indicating the depth perception image and/or the topographic image may be output to the remote output interface 220 (remote image output device 221). For example, when the display of the depth perception image is definitively set to ON, a simulation image indicating an operating status assisted by the operation assistance in the work machine 40, which is the operation target, in the virtual space is output to the remote output interface 220 (remote image output device 221). Then, when the work machine 40 in the virtual space is operated by the operator through the remote input interface 210 (remote operation mechanism 211), the simulation image indicates a state where the work machine 40 operates in accordance with such an operation mode and the position and orientation of the end attachment 445 and the like change. Thus, the remote control device 200, the remote input interface 210 (remote operation mechanism 211), and the remote output interface 220 (remote image output device 221) constitute the "simulation device". Here, in the simulation image indicating the operating status of the work machine 40, a depth perception image for representing the position or depth perception of one or more locations defined in the work mechanism 44 is displayed. FIG. 14 is a diagram illustrating a depth perception image, in the operation system according to the present embodiment. Consequently, for example, as illustrated in FIG. 14, a mark M is displayed in the simulation image. The mark M is displayed indicating the position of a second designated point p₂, which is the result of projecting a first designated point p₁, that is, a left-right center point of the proximal end of the end attachment 445, in the vertical direction. As the first designated point p₁, a point other than the left-right center point of the proximal end of the end attachment 445 (e.g., the distal end of the end attachment 445) may be designated. The second designated point p₂ may be displayed in the virtual space at a predetermined distance away from the first designated point p₁, and may be displayed at any height in the virtual space.

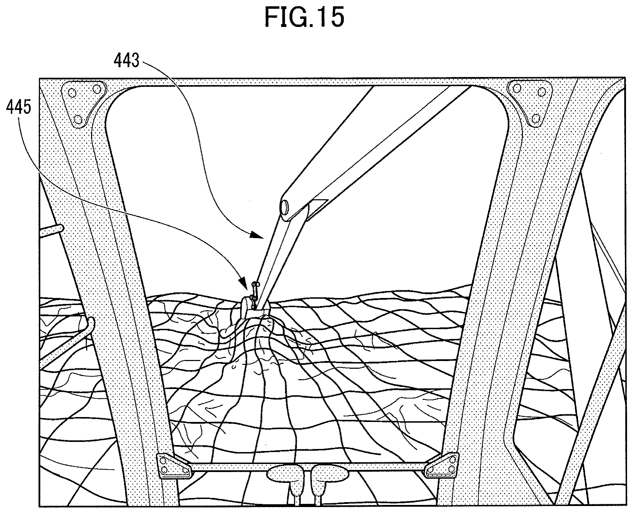

FIG. 15 is a diagram illustrating a topographic image, in the operation system according to the present embodiment. When the display of the topographic image is definitively set to ON. in the simulation image indicating the operating status of the work machine 40, a topographic image for representing topographic features around (in front of) the work machine 40 is displayed in a superimposed manner. Thus, for example, as illustrated in FIG. 15, a mesh-like topographic image representing unevenness of the topographic features or the ground surface is displayed in the simulation image.

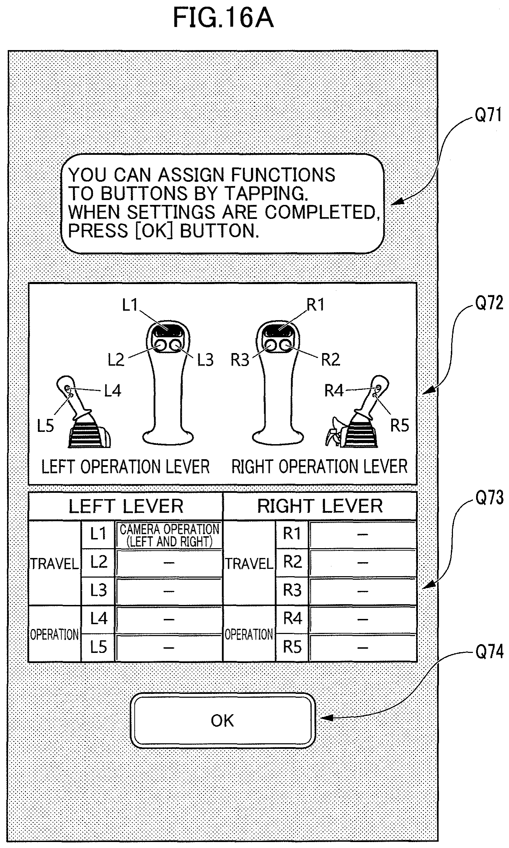

FIG. 16A is a diagram illustrating a first button function setting screen, in the operation system according to the present embodiment. When "button assignment" is selected as the designation item on the menu screen, the first button function setting screen illustrated in FIG. 16A is output to the remote output interface 220 (remote image output device 221). As illustrated in FIG. 16A, the first button function setting screen includes an operation guidance window Q71, a button layout window Q72, a function assignment status window Q73, and an OK button Q74. The operation guidance window Q71 displays information for guiding the operation procedures for assigning functions to a plurality of buttons that constitute the remote operation mechanism 211. The functions assigned to the buttons include the following, for example: a function of adjusting the angle of the actual machine imaging device 412 in the left-right direction; a function of adjusting the angle of the actual machine imaging device 412 in an up-down direction; zoom-in and zoom-out functions of the actual machine imaging device 412; a function of switching between ON and OFF states of a sound output device mounted on the work machine 40 (e.g., a horn that emits a warning sound to the surroundings); a setting function such as calibration of the operation levers constituting the remote operation mechanism 211; a function of switching between pressure increase and pressure decrease of the hydraulic oil for the work mechanism 44; a function of switching between excitation and non-excitation of a lifting magnet serving as the end attachment 445; and a function of releasing a state where the work machine 40 is temporarily stopped. The button layout window Q72 indicates the arrangement layout of the plurality of buttons that are subject to function assignment. For example, the button layout window Q72 indicates an arrangement layout of a total of ten buttons in which buttons L1, L2, and L3 are disposed on the left-side traveling lever 2110, buttons L4 and L5 are disposed on the left operation lever 2111, buttons R1, R2, and R3 are disposed on the right-side traveling lever 2110, and buttons R4 and R5 are disposed on the right operation lever 2112. The function assignment status window Q73 indicates a chart indicating the function assigned to each of the plurality of buttons. When the OK button Q74 is, for example, tapped, the functions assigned to the respective buttons, as illustrated in the function assignment status window Q73, are definitively set.

The definitively set functions assigned to the respective buttons may be stored and retained in the storage device constituting the remote control device 200 and/or in an external database, in association with an operator identifier and/or the actual machine identifier. Using the operator identifier used in the authentication processing and/or the actual machine identifier used for the operation target designation, the last definitively set functions assigned to the respective buttons may be retrieved or read from the storage device and then displayed by default in the function assignment status window Q73. The definitively set functions assigned to the respective buttons may simply be stored and retained in the storage device constituting the remote control device 200 and/or in an external database, read from the storage device or the like, and then displayed by default in the function assignment status window Q73.

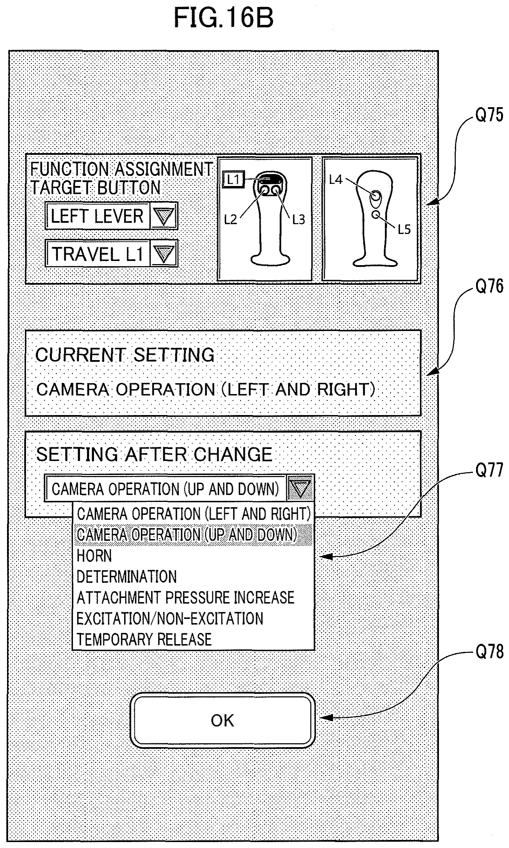

FIG. 16B is a diagram illustrating a second button function setting screen, in the operation system according to the present embodiment. When one button is selectively, for example, tapped from among the plurality of buttons indicated in the button layout window Q72 (or the function assignment status window Q73), the second button function setting screen illustrated in FIG. 16B is output to the remote output interface 220 (remote image output device 221). As illustrated in FIG. 16B, the second button function setting screen includes a button window Q75, a button function window Q76, a button function selection window Q77, and an OK button Q78. The button window Q75 displays (highlights as appropriate) the name and/or position of the one button selected from among the plurality of buttons. The button function window Q76 indicates the function assigned to the one button. The button function selection window Q77 indicates (in the form of a pull-down menu or the like) a list of functions assignable to the one button. When the OK button Q78 is, for example, tapped, the first button function setting screen is output to the remote output interface 220 (remote image output device 221) (see FIG. 16A).

Note that, when a plurality of actual machine imaging devices 412 having different imaging ranges (which may partially overlap) is mounted on the work machine 40, "screen assignment" may be selected as the designation item on the menu screen, and a correspondence may be set between the plurality of image output devices (displays or monitors) constituting the remote image output device 221 and captured images that are to be displayed on the respective image output devices and have been acquired through respective ones of the plurality of actual machine imaging devices 412.

As described above, various types of designation item setting processing are executed. Here, when a determination is made that the operation preparation processing that has been executed is completed (FIG. 4/YES in STEP 216), in the remote operation apparatus 20, the remote control device 200 executes remote operation processing for remotely operating the work machine 40 (FIG. 4/STEP 218). Upon completion of the operation preparation processing, when the designation item setting processing for a certain designation item is in progress, the designation item setting processing may be continuously executed (FIG. 4/STEP 214).

On the condition (necessary condition) that the communication for remotely operating the work machine 40 (operation target) by the remote operation apparatus 20 is established, in the work machine 40, the actual machine control device 400 transmits the captured images acquired through the actual machine imaging device 412 to the remote operation apparatus 20. The captured images (or captured image data) to be transmitted may be not only the captured images themselves, but also image data representing a simulated environmental image generated on the basis of the captured images.

For example, in the remote operation apparatus 20, the remote control device 200 may transmit the designation signal to the work machine 40 through the remote wireless communication device 250, so that the remote operation apparatus 20 may establish communication for remotely operating the work machine 40 (operation target). When the plurality of work machines 40 is the plurality of operation target candidates, the designation signal may be transmitted to each of the plurality of work machines 40. A determination is made as to whether the operator has performed the designation operation through the remote input interface 210, and when a result of the determination is affirmative, the designation signal may be transmitted. The "designation operation" is, for example, an operation, such as tapping on the remote input interface 210, that allows the operator to designate the work machine 40 intended for remote operation.

In the remote operation apparatus 20, when the captured images are received through the remote wireless communication device 250, the captured images or the work environment images are output to the remote image output device 221 (display device) (FIG. 6/STEP 280). Consequently, for example, captured images, in which a bucket corresponding to the end attachment 445 that is a part of the work mechanism 44, the ground, and the like are reflected in addition to the ground spreading in front of the cab 43, are output to the remote image output device 221.

In the designation item setting processing, when the designation item "button assignment" is selected, and the assignment layout of the functions to the respective buttons has been definitively set, the definitively set assignment layout is applied. Consequently, when buttons to which the function of adjusting the angle of the actual machine imaging device 412 and/or the zoom-in and zoom-out functions of the actual machine imaging device 412 are assigned are operated by the operator, the range and/or scale of the captured images can be adjusted (see FIG. 4/STEP 214, and FIGS. 16A and 16B).

In the designation item setting processing, when the designation item "guidance" is selected, and the display of the depth perception image is definitively set to be "enabled (ON)", the mark M as the depth perception image may be displayed in a superimposed manner on the captured image (see FIG. 4/STEP 214 and FIGS. 13 and 14). For example, the remote control device 200 calculates the position coordinates of the first designated point p₁, which is the left-right center point at the proximal end of the end attachment 445, on the basis of the derricking angle of the boom 441, the pivot angle of the arm 443, and the pivot angle of the end attachment 445, and superimposes and displays the mark M at the position of the second designated point p₂, which is the result of projecting the position coordinates at a position vertically downward. In the designation item setting processing, when the designation item "guidance" is selected and the display of the topographic image is set to be "enabled (ON)", a mesh as the topographic image may be displayed in a superimposed manner on the captured image (see FIG. 4/STEP 214 and FIGS. 13 and 15). The mesh displayed in a superimposed manner is generated on the basis of, for example, a result of acquiring a distance from the work machine 40 to the surrounding ground surface by a sensing device mounted on the work machine 40 and configured to measure a distance to the surrounding object.

Subsequently, the remote control device 200 recognizes the operation mode of the remote operation mechanism 211 (see FIG. 6/STEP) 281). Specifically, in the designation item setting processing, when the designation item "lever pattern" is selected and the lever pattern is definitively set, the operation mode of the remote operation mechanism 211 or of the operation levers 2110, 2111, and 2112 that constitute the remote operation mechanism 211 is recognized in accordance with the lever pattern (see FIG. 4/STEP 214 and FIGS. 9A and 9B). In the designation item setting processing, when the designation item "lever sensitivity" is selected and the lever sensitivity is definitively set, the operation mode of the remote operation mechanism 211 or of the operation levers 2110, 2111, and 2112 that constitute the remote operation mechanism 211 is recognized in accordance with the lever sensitivity (see FIG. 4/STEP 214 and FIG. 10).

Subsequently, the remote control device 200 determines whether the authentication flag f (see FIG. 5/STEP 261 and STEP 262) is 1 (see FIG. 6/STEP 282). When the authentication flag f is set to "1" in response to the success of the authentication processing for the operator (FIG. 6/YES in STEP 282 (see FIG. 5/YES in STEP 260 → STEP 261)), through the remote wireless communication device 250, a remote operation command corresponding to the operation mode is transmitted to the work machine 40 (FIG. 6/STEP 284). When the authentication flag f is set to "0" in response to the failure of the authentication processing for the operator (FIG. 6/NO in STEP 282 (see FIG. 5/NO in STEP 254 and NO in STEP 260 → STEP 262)), through the remote wireless communication device 250, transmission (conveyance) of the remote operation command corresponding to the operation mode to the work machine 40 is suspended (prohibited), or the remote operation command is only partially transmitted (restricted) to the work machine 40 (FIG. 6/STEP 286).

Then, the remote control device 200 acquires, in association with each other, an operation history, which is a history of operation of the work machine 40, through the remote operation mechanism 211, and an operator identifier for identifying an operator who operates the remote operation mechanism 211. In particular, in the present embodiment, the time series of the operation mode of the remote operation mechanism 211 by the operator is sequentially acquired, as an operation history of the work machine 40, in association with the operator identifier and/or the actual machine identifier, and is stored and retained in the storage device constituting the remote control device 200 and/or in an external database (FIG. 6/STEP 288). When execution of the remote operation processing for remotely operating the work machine 40 by the remote control device 200 (FIG. 4/STEP 218) is continued, the processing for the operation processing function (FIG. 6/STEP 280 → ·· → FIG. 6/STEP 288) is repeated.

In the work machine 40, when the actual machine control device 400 receives the remote operation command through the actual machine wireless communication device 450, the operations of the work mechanism 44 and the like are controlled in accordance with the remote operation command. For example, while objects such as excavated materials are held by the bucket serving as the end attachment 445, a predetermined operation accompanied by the operation of the work mechanism 44 or the like is executed to displace the real space position of the bucket.

In the designation item setting processing, when the designation item "operation assistance" is selected, and the operation assistance is definitively set to be "enabled (ON)", specific operation content is assisted on the basis of the definitive setting. For example, in a case where the horizontal pulling operation is assisted on the basis of the definitive setting, when the operator performs, through the remote input interface 210 (remote operation mechanism 211), the operation of bringing the bucket closer from the first position located forward away from the upper slewing body 42 of the work machine 40 (operation target) to the second position located closer to the upper slewing body 42 than the first position, the bucket tip linearly moves from the first position to the second position in the work machine 40, and a captured image or a work environment image capturing such a state is output to the remote image output device 221 (display device). Specifically, when the operator performs, through the remote input interface 210 (remote operation mechanism 211), the operation of pivoting the arm 443 downward while pivoting the boom 441 upward and further pivoting the bucket tip such that the bucket tip faces downward, the operation is corrected such that the bucket tip is not separated by a predetermined distance or more from the target trajectory linearly connecting the first position to the second position (the shift amount of the bucket tip with respect to the target trajectory is reduced), and is reflected in the operation of the work mechanism 44. The first position, the second position, and the target trajectory may be superimposed on the captured image or the work environment image and the resultant image may be output to the remote image output device 221 (display device), and the first position and the second position may be set to any positions by an operation of the operator (e.g., position setting can be performed by moving the bucket tip to a position desired to be the first position or the second position and pressing a determination button).

In the work machine 40, the actual machine control device 400 transmits the actual machine operating status acquired through the actual machine sensor group 416 to the remote operation apparatus 20. The actual machine operating status includes actual machine orientation (an inclination angle about the pitch axis and/or the roll axis with respect to the vertical direction of the upper slewing body 42), whether the prime mover is operating, orientation of the work mechanism 44, and the like. In the remote operation apparatus 20, when the actual machine operating status is received through the remote wireless communication device 250, orientation of the seat 24 is adjusted, by the remote control device 200 controlling the operation of the seat drive device 224, so as to align or match seat orientation to the actual machine orientation. At this time, from among frequency components representing the temporal change mode of the actual machine orientation, high-frequency components exceeding a threshold are cut and in accordance only with low-frequency components less than or equal to the threshold, the temporal change mode of the seat orientation may be adjusted.

When the remote control device 200 determines, on the basis of the actual machine operating status, that the prime mover of the work machine 40 is operating, the seat 24 may be vibrated by the seat drive device 224. The seat 24 vibrates at a predetermined minute amplitude about the pitch axis and/or the roll axis and at a frequency corresponding to the frequency of the prime mover, so that the orientation of the seat 24 slightly changes with reference to the designated orientation. Alternatively, the seat 24 vibrates at a predetermined minute amplitude and a frequency corresponding to the frequency of the prime mover in a direction parallel to at least one of the pitch axis, the roll axis, and the yaw axis, so that the orientation of the seat 24 slightly changes in at least one of a front-back direction, the left-right direction, and the up-down direction while being maintained at the designated orientation.

In the designation item setting processing, when the designation item "seat vibration" is selected and the vibration intensity of the seat 24 (or the seat device) is definitively set, the operation speed and amplitude of the seat drive device 224, and hence the change velocity and change amount of the orientation of the seat 24 are adjusted in accordance with the intensity (see FIG. 4/STEP 214 and FIG. 11).

In the remote operation apparatus 20, the remote control device 200 determines whether an operation end condition of the work machine 40 has been satisfied (FIG. 4/STEP 220). This operation end condition is a condition for determining that work using the work machine 40 that is the operation target is not performed.

The operation end condition includes, for example, a condition that the operation of the prime mover of the work machine 40 has been stopped (or that an operation of stopping the operation of the prime mover of the work machine 40 has been performed through the remote input interface 210). Note that the operation end condition may include a condition that the operation lever, traveling pedal, and/or optional pedal constituting the remote input interface 210 has been returned to the neutral position or the initial position in order to cause the work machine 40 to end a predetermined operation of actuation mechanism such as the work mechanism 44 (and such a state has been maintained for a certain period of time). Additionally, the operation end condition may include conditions such as whether the cutoff lever has been operated to the lock position, whether the operation of stopping operation of the prime mover of the work machine 40 has been performed at the remote input interface 210, and whether a switch constituting the remote input interface 210 has been switched from an ON state to an OFF state in order to cause the work machine 40 to end a predetermined operation of an actuation mechanism such as the work mechanism 44, and detection may be performed depending on whether a plurality of conditions has been satisfied.

When a determination is made that the operation end condition has not been satisfied (FIG. 4/NO in STEP 220), the remote operation of the work machine 40 by the remote operation apparatus 20 is continued (FIG. 4/STEP 218).

On the other hand, when a determination is made that the operation end condition has been satisfied (FIG. 4/YES in STEP 220), the remote control device 200 determines the content of the operation performed by the operator through the remote input interface 210 (FIG. 4/STEP 222).

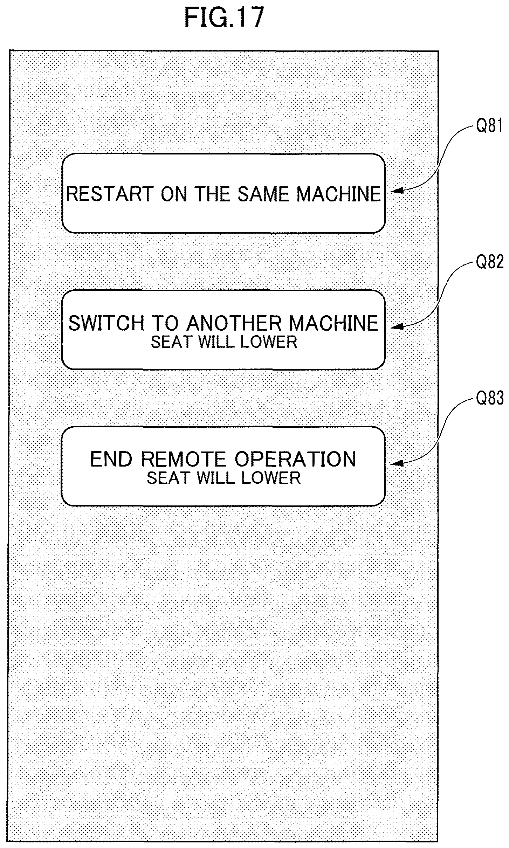

FIG. 17 is a diagram illustrating an operation selection screen, in the operation system according to the present embodiment. Specifically, the operation selection screen illustrated in FIG. 17 is output to the remote output interface 220. The operation selection screen indicates an operation resume button Q81, an operation switching button Q82, and an operation end button Q83 that constitute the remote input interface 210. The operation resume button Q81 constitutes an input interface for resuming the remote operation, through the remote operation apparatus 20, of the work machine 40 that is the operation target in a communication-established state with the remote operation apparatus 20. The operation switching button Q82 constitutes an input interface for starting the remote operation, through the remote operation apparatus 20, of the work machine 40 (second work machine) that is an operation target different from the work machine 40 (first work machine) that is the operation target in the communication-established state with the remote operation apparatus 20. The operation end button Q83 constitutes an input interface for ending the remote operation, through the remote operation apparatus 20, of the work machine 40 that is the operation target in the communication-established state with the remote operation apparatus 20.

When the operation resume button Q81 is, for example, tapped by the operator (when the operation content is the operation for resuming the remote operation, through the remote operation apparatus 20, of the work machine 40 that is the operation target in the communication-established state with the remote operation apparatus 20) (FIG. 4/1 in STEP 222), the remote operation of the work machine 40 by the remote operation apparatus 20 is continued (FIG. 4/STEP 218).

When the operation switching button Q82 is, for example, tapped (when the operation content is the operation for starting the remote operation, through the remote operation apparatus 20, of the work machine 40 (second work machine) that is an operation target different from the work machine 40 (first work machine) that is the operation target in the communication-established state with the remote operation apparatus 20) (FIG. 4/2 in STEP 222), the processing after the authentication processing (FIG. 4/STEP 200) and thereafter is repeated. In this case, since there is the work machine 40 (first work machine) that is the operation target for which communication with the remote operation apparatus 20 has been established, communication disconnection processing with the first work machine and communication establishment processing with the work machine 40 (second work machine) that is a new operation target are executed as the "operation preparation processing" (see FIG. 4/YES in STEP 208 → STEP 212).

When the authentication flag f is set to "0" in the authentication processing (see FIG. 5/NO in STEP 254 and NO in STEP 260 → STEP 262), the operation resume button Q81 and/or the operation switching button Q82 may be hidden, or an operation such as tapping may be disabled.

When the operation end button Q83 is, for example, tapped (when the operation content is the operation for ending the remote operation, through the remote operation apparatus 20, of the work machine 40 that is the operation target in the communication-established state with the remote operation apparatus 20) (FIG. 4/3 in STEP 222), communication disconnection processing between the remote operation apparatus 20 and the work machine 40 that is the operation target is executed (FIG. 4/STEP 224), and the remote operation for the work machine 40 by the remote operation apparatus 20 ends.

### (Operation and Effect)

According to the remote operation apparatus 20 and the operation system including the remote operation apparatus 20 that exhibit the foregoing functions, during the execution of the communication establishment processing serving as the operation preparation processing, it is possible to set the content of the designation item for assisting the operation of the work machine 40, which is the operation target, by the remote operation apparatus 20 after completion of the communication establishment processing (see FIG. 4/NO in STEP 208 → STEP 210→STEP 214, FIG. 9A, FIG. 9B, FIG. 10, FIG. 11, FIG. 12, FIG. 13, FIG. 16A, and FIG. 16B). Accordingly, it is possible to make effective use of the waiting time during the execution of the communication establishment processing between the remote operation apparatus 20 and the work machine 40 that is the operation target. As a result, it is also possible to reduce the operator's stress due to waiting time. Note that the setting of the content of the designation item (designation item setting processing) only needs to be executed at least during the execution of the communication establishment processing.

When the operation target is switched through the communication device from one work machine 40 (first operation target/first work machine/one target) to another work machine 40 (second operation target/second work machine/another target), the communication disconnection processing and the communication establishment processing are executed as the operation preparation processing (see FIG. 4/STEP 208 ·· YES→ STEP 212). When the communication disconnection processing and the communication establishment processing are executed, it is possible to set the content of the designation item through the remote input interface 210 (see FIG. 4/STEP 214). Accordingly, it is possible to make effective use of the waiting time during the execution of the communication disconnection processing and communication establishment processing for switching the operation target.

It is possible to simulatively experience, through the simulation device, the assistance mode and/or the operation mode of the work machine 40, which is the operation target, the assistance mode and/or the operation mode being predicted to occur in accordance with the setting content of the designation item through the remote input interface 210 (see FIG. 14 and FIG. 15). On the basis of the experience, it is possible to perform resetting or setting change of the content of the designation item through the remote input interface 210. As described above, the simulation device includes the remote control device 200, the remote input interface 210 (remote operation mechanism 211), and the remote output interface 220 (remote image output device 221).

The setting content of the designation item is stored in, for example, the storage device constituting the remote control device 200, and the setting content of the designation item stored in such a storage device is output to the remote output interface 220 (remote image output device 221) (see FIG. 9A/Q22, FIG. 10/Q32, FIG. 11/Q42, FIG. 12/Q52, FIG. 13/Q62 and Q63, and FIG. 16A/Q73). This allows an operator or the like to confirm the current setting content of the designation item that has been output to the remote output interface 220. On the basis of that output content, it is possible to perform resetting or setting change of the content of the designation item through the remote input interface 210 (see FIG. 9B/Q26 to Q29, FIG. 10/Q32, FIG. 11/Q42, FIG. 12/Q52, FIG. 13/Q62 and Q63, and FIG. 16B/Q75 to Q78).

According to the remote operation apparatus 20 and the operation system including the remote operation apparatus 20 that exhibit the foregoing functions, when the operation target is switched from the work machine 40 serving as one operation target (first work machine) to the work machine 40 serving as another operation target (second work machine), the communication disconnection processing and the communication establishment processing are executed in parallel (see FIG. 4/YES in STEP 208 → STEP 210). The "communication disconnection processing" is processing for disconnecting the communication that had been established between the remote operation apparatus 20 and the work machine 40 serving as the one operation target. The "communication establishment processing" is processing for establishing communication between the remote operation apparatus 20 and the work machine 40 serving as the other operation target. Thus, the operation target can be smoothly switched.

The operator can designate, in accordance with the intention of the operator, the work machine 40 serving as a new operation target through the remote input interface 210. More specifically, the operator can release, in accordance with the intention of the operator, the previous designation of the work machine 40 that has been the operation target through the remote input interface 210, and then can designate the work machine 40 that is a new operation target (see FIG. 4/2 in STEP 222 → STEP 204 and FIG. 17/Q82 → ·· → FIG. 8B). This can avoid a situation in which the operation target is erroneously switched when the operator does not intend to switch the operation target.

When, through the remote input interface 210, as the new operation target, the work machine 40 that is one operation target in a communication-established state is designated, the remote control device 200 suspends the execution of the communication disconnection processing and the communication establishment processing (see FIG. 4/1 in STEP 222 → STEP 218 and FIG. 17/Q81). When the work machine 40 designated as a new operation target is identical to the work machine 40 that had been designated so far, the communication already established with that work machine 40 is continuously used. This eliminates the necessity for newly executing the communication disconnection processing and the communication establishment processing upon designation (redesignation) of the work machine 40 that is the new operation target, so that the operation of the operation target can be smoothly resumed.

When the operator provides, in accordance with the intention of the operator, an instruction to end the operation of the work machine 40 that is the operation target through the remote input interface 210 (operation end command), the remote control device 200 executes the communication disconnection processing (see FIG. 4/3 in STEP 222 → STEP 224 and FIG. 17/Q83). This can avoid a situation in which the communication established between the remote operation apparatus 20 and the work machine 40 that is the operation target is erroneously disconnected.

According to the remote operation apparatus 20 and the operation system including the remote operation apparatus 20 that exhibit the foregoing functions, the operation history of the work machine 40 that is the operation target can be distinctively acquired for each operator identifier, and hence for each operator identified by the operator identifier, and be stored and retained in a database or the like (see FIG. 6/STEP 288). When the operation target of the remote operation apparatus 20 is switched from one work machine 40 (first work machine) to another work machine 40 (second work machine) (see FIG. 4/2 in STEP 222 → ·· → STEP 204 and FIG. 8B/Q14 and Q15), the operation history of the other work machine 40 is acquired together with the operator identifier (see FIG. 6/STEP 288). Consequently, the operation history for each different operation target (work machine 40) for the operator can be distinctively acquired.

Furthermore, when the condition that work using the work machine 40 that is the operation target is not performed is satisfied, the remote control device 200 determines whether a switching instruction for the operation target is given (see FIG. 4/YES in STEP 220 → STEP 222). Thus, it is possible to avoid a situation in which the one operation target is switched to another operation target and the work is stopped contrary to the operator's intention while the work using the work machine 40 that is one operation target is performed.

When the operator is changed from one operator to another operator, the operation history of the work machine 40 that is the operation target is acquired together with an operator identifier for identifying the other operator (see FIG. 5/STEP 202 → ·· → YES in STEP 250, and FIG. 6/STEP 288). Consequently, the operation history of the work machine 40 that is the operation target can be distinctively acquired for each different operator.

Additionally, when a change notification from one operator to another operator is accepted through the remote input interface 210 (and further, when the operator has actually been changed, and the operator identifier has changed from one operator identifier corresponding to one operator to another operator identifier corresponding to another operator), the operation history of the operation target is acquired together with the operator identifier of the other operator (see FIG. 5/STEP 202 → ·· → YES in STEP 240 and FIG. 6/STEP 288). Consequently, the operation history of the work machine 40 that is the operation target can be distinctively acquired for each different operator. Furthermore, when a switching instruction (switching command) for switching the operation target from one work machine 40 (first work machine) to another work machine 40 (second work machine) is accepted through the remote input interface 210 (and further, when the operation target has actually been switched), the operation history of the other work machine 40 is acquired together with (in association with) the operator identifier (see FIG. 5/STEP 202 → ·· → YES in STEP 240 and FIG. 6/STEP 288). Consequently, the operation history for each different work machine 40, which is the operation target, for the operator can be distinctively acquired.

Upon the change of the operator from one operator to another operator, when the authentication of the other operator has failed (see FIG. 5/YES in STEP 250 → STEP 251 → ·· → NO in STEP 260 → STEP 262), the operation of the work machine 40 serving as the operation target through the remote operation mechanism 211 by the other operator is prohibited or restricted (see FIG. 6/NO in STEP 282 → STEP 286). Accordingly, the histories of prohibited or restricted operations of both the other operator and the work machine 40 serving as the operation target are acquired, and stored and retained in a database or the like.

Upon the change of the operator from one operator to another operator, when the authentication of the other operator has failed (see FIG. 5/YES in STEP 250 → STEP 251 → ·· → NO in STEP 260 → STEP 262), switching of the work machine 40 serving as the operation target in response to a switching instruction from the other operator is prohibited. On the other hand, when the authentication of the other operator has succeeded, switching of the work machine 40 serving as the operation target in response to a switching instruction from the other operator is permitted.

### (Another Embodiment of Present Invention)

When the operation target is switched from the work machine 40 that is one operation target to the work machine 40 that is another operation target different in specification from the one operation target, the remote control device 200 may accept, through the remote input interface 210, a setting of designation item corresponding to a point of difference in the specification. For example, when the type of the end attachment 445 is different, the setting of the assignment layout for the buttons may be enabled such that a function unique to an operation of the end attachment 445 (e.g., a lifting magnet) of the work machine 40 after switching is assigned to the button. Specifically, when a function unique to the operation of the end attachment 445, which is the point of difference in the specification of the work machine 40 after switching, is not assigned to a button, a determination is made that the operation preparation processing has not been completed (FIG. 4/NO in STEP 216), and the designation item setting processing may be continuously executed (FIG. 4/STEP 214). Consequently, for the operation corresponding to the point of difference in the specification, the unique function is reliably assigned to a button, enabling a smooth operation of the other work machine 40 after the operation target has been switched.

In the above embodiment, the "simulation device" presents the simulation image indicating the operating status of the work machine 40 on the basis of the operation assistance, the display of the depth perception image, and the display of the topographic image that have been designated on the menu screen. However, the functions of other designation items that can be designated on the menu screen may also be experienced through the "simulation device". For example, in the designation item setting processing, when the designation item "lever pattern" is selected, and the lever pattern is definitively set, the operation mode of the remote operation mechanism 211 or of the operation levers 2110, 2111, and 2112 that constitute the remote operation mechanism 211 is recognized in accordance with the lever pattern, and operations such as those of the work mechanism 44 of the work machine 40 in the virtual space are controlled in accordance with the recognized operation mode. In the designation item setting processing, when the designation item "lever sensitivity" is selected, and the lever sensitivity is definitively set, operations such as those of the work mechanism 44 of the work machine 40 in the virtual space are controlled in accordance with the operation mode recognized in accordance with the lever sensitivity. In the designation item setting processing, when the designation item "seat vibration" is selected, and the vibration intensity of the seat is definitively set, the operation speed and amplitude of the seat drive device 224, and hence the change velocity and change amount of the orientation of the seat 24 are adjusted in accordance with the operating status of the work machine 40 in the virtual space depending on the intensity. The operating status of the work machine 40 in the virtual space includes the inclination angle about the pitch axis and/or the roll axis with respect to the vertical direction of the upper slewing body 42 of the work machine 40 in the virtual space, whether the prime mover of the work machine 40 in the virtual space is operating, the orientation of the work mechanism 44 of the work machine 40 in the virtual space, and the like. In the designation item setting processing, when the designation item "button assignment" is selected, and the button assignment degree is definitively set, for example, when the buttons to which the function of adjusting the angle of the actual machine imaging device 412 of the work machine 40 in the virtual space and/or zoom-in and zoom-out functions of the actual machine imaging device 412 of the work machine 40 in the virtual space are assigned are operated by the operator, a virtual captured image or a virtual work environment image, with the range and/or scale of the captured image adjusted, is output to the remote image output device 221 (display device).

Among the functions of the remote operation apparatus 20, except for functions unique to the remote operation apparatus 20, such as the communication establishment processing (see FIG. 4/STEP 210 and STEP 212), the communication disconnection processing (see FIG. 4/STEP 212), and the remote operation processing (see FIG. 4/STEP 218), the processing such as the authentication processing (see FIG. 4/STEP 200), the processing for setting the operation target and the work content (see FIG. 4/STEP 204), the designation item setting processing (see FIG. 4/STEP 214), and the like may be executed by the information processing terminal 10. In the functions of the remote operation apparatus 20, the communication establishment processing (see FIG. 4/STEP 210 and STEP 212), the communication disconnection processing (see FIG. 4/STEP 212), and the remote operation processing (see FIG. 4/STEP 218) and the like may be executed by a server (management device) that is capable of mutual communication with the remote operation apparatus 20 and the work machine 40 via the second communication network.

The communication disconnection processing may be executed such that the operating statuses (the energized state and the like) of the actual machine control device 400, the actual machine wireless communication device 450, and the like of the work machine 40 are maintained in the statuses before the communication disconnection processing, even after the communication disconnection processing has been executed between the remote operation apparatus 20 and the work machine 40 that is one operation target. Such a command at the time of disconnection may be transmitted by the remote control device 200. This eliminates, when communication is established again between the remote operation apparatus 20 and the work machine 40 that is the one operation target, the necessity of processing of returning the operating statuses of the actual machine control device 400, the actual machine wireless communication device 450, and the like to the statuses before the communication disconnection processing (e.g., processing of energizing the actual machine wireless communication device 450 to return to a state where the communication establishment processing can be executed), and thus the communication establishment processing can be smoothly and quickly executed. For example, at the time of executing the communication disconnection processing, the energized state of the actual machine control device 400 mounted on the work machine 40 is maintained (the processing of cutting off the supply of the power to the actual machine control device 400 is not executed), and the energized state of the actual machine imaging device 412 and the actual machine sensor group 416 is maintained (the processing of cutting off the supply of the power to the actual machine imaging device 412 and the actual machine sensor group 416 is not executed). Then, the actual machine control device 400 transmits, to the transmission destination identified and indicated by the operation apparatus identifier, the captured images acquired by the actual machine imaging device 412 and the signal corresponding to the actual machine operating status relating to the state of the work machine 40 acquired by the actual machine sensor group 416, and continues the processing of receiving, through the actual machine wireless communication device 450, the signal corresponding to the operation mode of the remote operation lever for performing control to operate the actuation mechanism. In this case, although the signal corresponding to the actual machine operating status is transmitted to the transmission destination identified and indicated by the operation apparatus identifier, the remote operation apparatus 20 that is the transmission destination can determine that the received signal is not for the current operation target of the remote operation apparatus 20 by determining whether information related to the actual machine identifier included in the received signal corresponds to that of the work machine 40 that is the current operation target of the remote operation apparatus 20. Then, since the received signal is not for the current operation target of the remote operation apparatus 20, the remote operation apparatus 20 executes processing of discarding the received signal. Note that, when the actual machine control device 400 of the work machine 40 is included in the control device according to the present invention, the actual machine control device 400 may perform control such that the operating statuses (the energized state and the like) of the actual machine control device 400, the actual machine wireless communication device 450, and the like are maintained in the statuses before the communication disconnection processing.

By executing the communication disconnection processing, part of the communication established between the remote operation apparatus 20 and the work machine 40 that is one operation target may be disconnected. For example, at the time of executing the communication disconnection processing, the processing of turning off the power of the actual machine imaging device 412 and the actual machine sensor group 416 that have been activated is executed, while the energized state of the actual machine control device 400 mounted on the work machine 40 is maintained (the processing of cutting off the supply of the power to the actual machine control device 400 is not executed). Then, the actual machine control device 400 transmits, to the transmission destination identified and indicated by the operation apparatus identifier, the captured images acquired by the actual machine imaging device 412 and the signal corresponding to the actual machine operating status relating to the state of the work machine 40 acquired by the actual machine sensor group 416, and continues the processing of receiving, through the actual machine wireless communication device 450, the signal corresponding to the operation mode of the remote operation lever for performing control to operate the actuation mechanism. In this case, the signal corresponding to the actual machine operating status relating to the state of the work machine 40 acquired by the actual machine sensor group 416 becomes an empty signal with no information, and the signal corresponding to the operation mode of the remote operation lever will not be received until the work machine 40 becomes an operation target again. The empty signal may be replaced with a signal representing information indicating that the signal is empty. The empty signal may be transmitted at a transmission period lower than the transmission period at which the signals corresponding to the actual machine operating status acquired by the activated actual machine imaging device 412 and actual machine sensor group 416 are transmitted to the transmission destination. In this case, although the signal corresponding to the actual machine operating status is transmitted to the transmission destination identified and indicated by the operation apparatus identifier, the remote operation apparatus 20 that is the transmission destination can determine that the received signal is not for the current operation target of the remote operation apparatus 20 by determining whether information related to the actual machine identifier included in the received signal corresponds to that of the work machine 40 that is the current operation target of the remote operation apparatus 20. Then, since the received signal is not for the current operation target of the remote operation apparatus 20, the remote operation apparatus 20 executes processing of discarding the received signal. Consequently, since the communication volume between the remote operation apparatus 20 and the work machine 40 is maintained while being lower than that in the communication-established state, when communication is established again between the remote operation apparatus 20 and the work machine 40 serving as the one operation target, the processing of returning the operating statuses of the actual machine control device 400, the actual machine wireless communication device 450, and the like to the statuses before the communication disconnection processing is unnecessary or can be simplified. For example, when the actual machine control device 400 receives a communication establishment request signal from the remote control device 200, the actual machine control device 400 can transmit, to the remote control device 200, a signal including captured images and the actual machine operating status simply by activating the actual machine imaging device 412 and the actual machine sensor group 416, and can return to the statuses before the communication disconnection processing. Additionally, for example, at the time of executing the communication disconnection processing, the actual machine control device 400 may keep the supply of the power to the actual machine imaging device 412 and the actual machine sensor group 416 enabled by not executing the processing of turning off the power of the actual machine imaging device 412 and the actual machine sensor group 416 that have been activated. In this case, the remote control device 200 has been receiving, even before transmitting the communication establishment request signal to the actual machine control device 400, a signal including captured images and the actual machine operating status, and, at the time of executing the communication establishment processing, outputs the captured images and the actual machine operating status to the remote output interface 220. As described above, smooth and prompt execution of the communication establishment processing is achieved. Note that the communication disconnection processing in the present invention includes, in addition to complete disconnection of all communications between the communication devices, cases in which some communications are maintained as described above. In this case, an aspect may be adopted in which the communications between the communication devices include a main communication requiring a large communication volume and a sub communication requiring a relatively small communication volume, and in the communication disconnection processing, the main communication is disconnected while the sub communication is maintained.

When the condition that no operator change notification has been issued through the remote input interface 210 (that the first flag f1 is set to "0") is satisfied (see FIG. 5/NO in STEP 240 → STEP 242), while the communication that had been established with the work machine 40 serving as one operation target is maintained, a determination may be made whether a switching instruction for the work machine 40 that is the operation target is given through the remote input interface 210 (see FIG. 4/STEP 222). Accordingly, when the work machine 40 designated as the new operation target is identical to the previous operation target (see FIG. 4/1 in STEP 222), the communication already established between the remote operation apparatus 20 and the work machine 40 is continuously used, eliminating the necessity of newly executing the communication disconnection processing and the communication establishment processing, so that the operation of the work machine 40 can be smoothly resumed.

When the conditions that the operator change notification has been issued through the remote input interface 210 (that the first flag f1 is set to "1") and that the acquired operator identifier has changed from one operator identifier to another operator identifier (that the second flag f2 is set to "1") are satisfied (see FIG. 5/YES in STEP 240 →STEP 241 and YES in STEP 250 → STEP 251), a determination may be made whether a switching instruction for the work machine 40 serving as the operation target is given through the remote input interface 210 (see FIG. 4/STEP 222). Accordingly, when the operator is changed from one operator to another operator, the work machine 40 serving as the operation target to be remotely operated by the other operator is prevented from being designated by the one operator, and the other operator can designate, in accordance with the intention of the other operator, the work machine 40 serving as the operation target that the other operator will remotely operate.

When the condition that the operator change notification has been issued through the remote input interface 210 (that the first flag f1 is set to "1'') is satisfied (see FIG. 5/YES in STEP 240 → STEP 241), by executing the communication disconnection processing, the communication that had been established between the remote operation apparatus 20 and the work machine 40 serving as the operation target may be disconnected. This prevents a situation in which the other operator after changing feels any sense of discomfort due to the communication-established state remaining between the remote operation apparatus 20 and the work machine 40 serving as the operation target designated by the one operator before changing. For example, the captured images or the work environment images received by the remote operation apparatus 20 from the work machine 40 serving as the operation target designated by the one operator are output to the remote image output device 221. Since the captured images or the work environment images are irrelevant to the other operator's own remote operation and are unnecessary information, if the state where the captured images or the work environment images are being output to the remote image output device 221 persists, such a state may cause discomfort to the other operator. Here, when a change notification is issued, the communication established between the remote operation apparatus 20 and the work machine 40 serving as the operation target is disconnected, so that the captured images or the work environment images are no longer output to the remote image output device 221, thereby preventing a situation in which the other operator experiences discomfort.

In the above embodiment, when the condition that the switching instruction for the work machine 40 serving as the operation target is given through the remote input interface 210 is satisfied (see FIG. 4/2 in STEP 222 and FIG. 17/Q82) and a determination is made that an existing operation target is present (FIG. 4/YES in STEP 208), the remote control device 200 starts, as the "operation preparation processing", execution of the communication disconnection processing in addition to the communication establishment processing (FIG. 4/STEP 212). However, the above embodiment is not limited thereto. For example, when the condition that, after disconnection of the communication that had been established with the one work machine 40 (first work machine) in response to an operation through the remote input interface 210 by the operator, the switching instruction for the work machine 40 serving as the operation target is given through the remote input interface 210 by the operator is satisfied (see FIG. 4/2 in STEP 222 and FIG. 17/Q82), the communication establishment processing may be executed to thereby establish communication with another work machine 40 (second work machine). In other words, the input interface is capable of further accepting a switching command for switching the operation target from the one operation target, and accepts the designation command for designating the other operation target as the operation target after accepting the switching command. This can execute, in accordance with the intention of the operator, communication establishment processing with respect to the work machine 40 (first work machine) and communication disconnection processing with respect to the work machine 40 (second work machine).

In performing the work using the work machine 40 serving as the operation target (FIG. 4/STEP 218), when the condition that an operator change notification from one operator to another operator has been issued through the remote input interface 210 is satisfied (see FIG. 5/YES in STEP 240 → STEP 241), the operation history of the work machine 40 serving as the operation target may be acquired together with (in association with) the operator identifier identifying the other operator (see FIG. 6/STEP 288).

Note that, in the above embodiment, an aspect has been described in which the operator change notification and the switching instruction for the operation target are input through the remote input interface 210, but one of them may be input through the terminal input interface 110, and transmitted from the information processing terminal 10 to the remote operation apparatus 20. That is, the input interface according to the present invention may include an operator switching input interface capable of accepting the operator change notification, and an operation target switching input interface capable of accepting the switching instruction for the operation target. Other individual input interfaces may be used.

An operation apparatus according to a first aspect of the present invention is an operation apparatus for operating an operation target, the operation apparatus including: an operation mechanism that accepts an operation by an operator; and a control device that acquires, in association with each other, an operation history that is a history of operating the operation target through the operation mechanism, and an operator identifier for identifying an operator who operates the operation mechanism.

According to the operation apparatus having such a configuration, the operation history of the operation target can be distinctively acquired for each operator identifier, and hence for each operator identified by the operator identifier.

An operation apparatus according to a second aspect of the present invention is the operation apparatus according to the first aspect, preferably further including a communication device capable of performing communication with the operation target, in which the control device communicates, through the communication device, with a predetermined operation target selected from among a plurality of operation targets, thereby enabling the predetermined operation target to be operated by the operation mechanism.

According to the operation apparatus having such a configuration, even when a predetermined operation target can be selected from among the plurality of operation targets and operated, the operation history of the operation target can be distinctively acquired for each operator identifier, and hence for each operator identified by the operator identifier.

An operation apparatus according to a third aspect of the present invention is the operation apparatus according to the first or second aspect, in which, preferably, the control device is capable of switching the operation target from one target to another target in response to a switching instruction for switching the operation target and the control device, when the operation target is switched from the one target to the other target, acquires the operation history of the other target and the operator identifier in association with each other.

According to the operation apparatus having such a configuration, when the operation target is switched from one operation target to another operation target, the operation history of the other operation target is acquired together with the operator identifier. Consequently, the operation history for each different operation target for the operator can be distinctively acquired.

An operation apparatus according to a fourth aspect of the present invention is the operation apparatus according to the third aspect, in which, preferably, when a condition that work using the operation target is not performed is satisfied, the control device determines whether the switching instruction for the operation target is given.

According to the operation apparatus having such a configuration, a determination is made as to whether the switching instruction for the operation target is given on the condition that the work using the operation target is not performed. It is possible to avoid a situation in which the one operation target is switched to another operation target and the work is stopped contrary to the operator's intention while the work using one operation target is being performed.

An operation apparatus according to a fifth aspect of the present invention is the operation apparatus according to any one of the first to fourth aspects, in which, preferably, when the operator identifier has changed from one operator identifier corresponding to one operator to another operator identifier corresponding to another operator, the control device acquires the operation history of the operation target and the other operator identifier in association with each other.

According to the operation apparatus having such a configuration, when the operator is changed from one operator to another operator, the operation history of the operation target is acquired together with an operator identifier for identifying the other operator. Consequently, the operation history of the operation target can be distinctively acquired for each different operator.

An operation apparatus according to a sixth aspect of the present invention is the operation apparatus according to any one of the first to fifth aspects, preferably further including an input unit capable of accepting at least one of an operator change notification from one operator to another operator and a switching instruction for the operation target from one target to another target.

According to the operation apparatus having such a configuration, when a change notification from one operator to another operator is accepted through the input unit (and further, when the operator has actually been changed), the operation history of the operation target is acquired together with the operator identifier of the other operator. Consequently, the operation history of the operation target can be distinctively acquired for each different operator. In addition to or instead of this, when a switching instruction from one operation target to another operation target is accepted through the input unit (and further, when the operation target has actually been switched), an operation history of the other operation target is acquired together with the operator identifier. Consequently, the operation history for each different operation target for the operator can be distinctively acquired.

An operation apparatus according to a seventh aspect of the present invention is the operation apparatus according to the sixth aspect, in which, preferably, the input unit includes: an operator switching input interface capable of accepting the operator change notification; and an operation target switching input interface capable of accepting the switching instruction for the operation target.

According to the operation apparatus having such a configuration, the operator change notification and the switching instruction for the operation target are accepted through the input unit. Thus, the operation history of the operation target can be distinctively acquired for each different operator, and/or the operation history for each different operation target for the operator can be distinctively acquired.

An operation apparatus according to an eighth aspect of the present invention is the operation apparatus according to the sixth aspect, preferably, further including a communication device capable of performing communication with the operation target, in which the control device is capable of executing communication establishment processing for establishing communication with the operation target through the communication device, and communication disconnection processing for disconnecting communication that had been established with the operation target, and the control device, when a condition that no operator change notification has been issued through the input unit is satisfied, determines, while maintaining the communication established with the one operation target, whether the switching instruction for the operation target is given through the input unit.

According to the operation apparatus having such a configuration, on the condition that no operator change notification has been issued through the input unit, whether the switching instruction for the operation target is given through the input unit is determined while the communication established with the one operation target is maintained. Accordingly, when the operation target designated as the new operation target is identical to the previous operation target, the communication already established between the operation apparatus and the operation target is continuously used, eliminating the necessity of newly executing the communication disconnection processing and the communication establishment processing on the operation target, so that the operation of the operation target can be smoothly resumed.

An operation apparatus according to a ninth aspect of the present invention is the operation apparatus according to the sixth aspect, preferably, further including a communication device capable of performing communication with the operation target, in which the control device is capable of executing communication establishment processing for establishing communication with the operation target through the communication device, and communication disconnection processing for disconnecting communication that had been established with the operation target. and the control device, when conditions that the operator change notification has been issued through the input unit and that the operator identifier acquired has changed from one operator identifier to another operator identifier are satisfied, determines whether the switching instruction for the operation target is given through the input unit.

According to the operation apparatus having such a configuration, when the operator is switched from one operator to another operator, the operation target is prevented from being switched by the one operator, and the operation target can be switched in accordance with the intention of the other operator.

An operation apparatus according to a tenth aspect of the present invention is the operation apparatus according to the ninth aspect, in which, preferably, when the condition that the operator change notification has been issued through the input unit is satisfied, the control device executes the communication disconnection processing for disconnecting the communication that had been established with the operation target.

According to the operation apparatus having such a configuration, when the operator is changed from one operator to another operator, the communication established with the operation target is disconnected. This achieves a state where the operation target for the other operator is absent, and prevents a situation in which the other operator feels any sense of discomfort due to the communication-established state remaining between the operation apparatus and the operation target designated by the one operator.

An operation apparatus according to an eleventh aspect of the present invention is the operation apparatus according to the tenth aspect, in which, preferably, the control device executes the communication establishment processing for establishing communication with the other operation target when a condition that a switching instruction for the operation target has been given through the input unit after disconnection of the communication that has been established with the one operation target is satisfied.

According to the operation apparatus having such a configuration, a switching instruction is given through the input unit in accordance with the intention of the operator, and the operation target after being actually switched can be operated by the operator. Consequently, both the operator identifier of the operator and the operation history of the operation target after the switching can be acquired.

An operation apparatus according to a twelfth aspect of the present invention is the operation apparatus according to any one of the first to eleventh aspects, in which, preferably, when a condition that an operator change notification from one operator to another operator has been issued through an input unit is satisfied while work using the operation target is being performed, the control device acquires, in association with each other, the operation history of the operation target and the operator identifier for identifying the other operator.

According to the operation apparatus having such a configuration. when the operator has changed while the work using the operation target is being performed, the operation history of the operation target is acquired together with the operator identifier of the operator after changing.

An operation apparatus according to a thirteenth aspect of the present invention is the operation apparatus according to any one of the first to twelfth aspects, in which, preferably, the control device executes authentication processing of the operator on a basis of the operator identifier acquired, and prohibits or restricts conveyance of an operation mode of the operation mechanism by the operator to the operation target when authentication of the operator has failed.

According to the operation apparatus having such a configuration, upon the change of the operator from one operator to another operator, when the authentication of the other operator has failed, the operation of the operation target through the operation mechanism by the other operator is prohibited or restricted. Accordingly, the histories of prohibited or restricted operations of both the other operator and the operation target are acquired.

An operation apparatus according to a fourteenth aspect of the present invention is the operation apparatus according to any one of the first to thirteenth aspects, in which, preferably, the control device executes authentication processing of the operator on a basis of the operator identifier acquired, prohibits switching of the operation target when authentication of the operator has failed, and permits the switching of the operation target when the authentication of the operator has succeeded.

According to the operation apparatus having such a configuration, upon the change of the operator from one operator to another operator, when the authentication of the other operator has failed, switching of the operation target in response to a switching instruction from the other operator is prohibited. On the other hand, when the authentication of the other operator has succeeded, switching of the operation target in response to a switching instruction from the other operator is permitted.

The present invention provides an operation system including the operation apparatus according to any one of the first to fourteenth aspects and the operation target.

## Claims

1. An operation apparatus for operating an operation target, the operation apparatus comprising:
an operation mechanism that accepts an operation by an operator; and
a control device that acquires, in association with each other, an operation history that is a history of operating the operation target through the operation mechanism, and an operator identifier for identifying an operator who operates the operation mechanism.

2. The operation apparatus according to claim 1, further comprising
a communication device capable of performing communication with the operation target, wherein
the control device communicates, through the communication device, with a predetermined operation target selected from among a plurality of operation targets, thereby enabling the predetermined operation target to be operated by the operation mechanism.

3. The operation apparatus according to claim 1 or 2, wherein
the control device is capable of switching the operation target from one target to another target in response to a switching instruction for switching the operation target, and
the control device, when the operation target is switched from the one target to the other target, acquires the operation history of the other target and the operator identifier in association with each other.

4. The operation apparatus according to claim 3, wherein
when a condition that work using the operation target is not performed is satisfied, the control device determines whether the switching instruction for the operation target is given.

5. The operation apparatus according to claim 1 or 2, wherein
when the operator identifier has changed from one operator identifier corresponding to one operator to another operator identifier corresponding to another operator, the control device acquires the operation history of the operation target and the other operator identifier in association with each other.

6. The operation apparatus according to claim 1 or 2, further comprising
an input unit capable of accepting at least one of an operator change notification from one operator to another operator and a switching instruction for the operation target from one target to another target.

7. The operation apparatus according to claim 6, wherein
the input unit includes:
an operator switching input interface capable of accepting the operator change notification; and
an operation target switching input interface capable of accepting the switching instruction for the operation target.

8. The operation apparatus according to claim 6, further comprising
a communication device capable of performing communication with the operation target, wherein
the control device is capable of executing communication establishment processing for establishing communication with the operation target through the communication device, and communication disconnection processing for disconnecting communication that had been established with the operation target, and
the control device, when a condition that no operator change notification has been issued through the input unit is satisfied, determines, while maintaining the communication established with the one operation target, whether the switching instruction for the operation target is given through the input unit.

9. The operation apparatus according to claim 6, further comprising
a communication device capable of performing communication with the operation target, wherein
the control device is capable of executing communication establishment processing for establishing communication with the operation target through the communication device, and communication disconnection processing for disconnecting communication that had been established with the operation target, and
the control device, when conditions that the operator change notification has been issued through the input unit and that the operator identifier acquired has changed from one operator identifier to another operator identifier are satisfied, determines whether the switching instruction for the operation target is given through the input unit.

10. The operation apparatus according to claim 9, wherein
when the condition that the operator change notification has been issued through the input unit is satisfied, the control device executes the communication disconnection processing for disconnecting the communication that had been established with the operation target.

11. The operation apparatus according to claim 10, wherein
the control device executes the communication establishment processing for establishing communication with the other operation target when a condition that a switching instruction for the operation target has been given through the input unit after disconnection of the communication that has been established with the one operation target is satisfied.

12. The operation apparatus according to claim 1 or 2, wherein
when a condition that an operator change notification from one operator to another operator has been issued through an input unit is satisfied while work using the operation target is being performed, the control device acquires, in association with each other, the operation history of the operation target and the operator identifier for identifying the other operator.

13. The operation apparatus according to claim 1 or 2, wherein
the control device executes authentication processing of the operator on a basis of the operator identifier acquired, and prohibits or restricts conveyance of an operation mode of the operation mechanism by the operator to the operation target when authentication of the operator has failed.

14. The operation apparatus according to claim 1 or 2, wherein
the control device executes authentication processing of the operator on a basis of the operator identifier acquired, prohibits switching of the operation target when authentication of the operator has failed, and permits the switching of the operation target when the authentication of the operator has succeeded.

15. An operation system comprising:
the operation apparatus according to any one of claims 1 to 14; and
the operation target.
